# EUROPÄISCHE PATENTANMELDUNG

(11) **EP 2 236 535 A1**
(43) Veröffentlichungstag der Anmeldung: **06.10.2010**
(21) Anmeldenummer: 09156884.0
(22) Anmeldetag: 31.03.2009
(51) Int. Cl.: C08G 18/32, C08G 18/10, C08G 18/50, C09J 175/08, C08G 18/12

(54) **Unter Wärmeeinwirkung beschleunigt aushärtende, feuchtigkeitsreaktive Polyurethanzusammensetzung**

(71) Anmelder: Sika Technology AG, 6340 Baar (CH)
(72) Erfinder: Burckhardt, Urs, 8049, Zürich (CH); Gimmnich, Peter, 78467, Konstanz (CH)
(74) Vertreter: Sika Patent Attorneys

(57) **Zusammenfassung**

Die vorliegende Erfindung betrifft Zusammensetzungen, welche mindestens ein Isocyanatgruppen aufweisendes Polymer, mindestens ein spezielles blockiertes Amin sowie mindestens eine feinteilige, bei Raumtemperatur feste, bei Erwärmung auf eine Mindesttemperatur im Bereich von 50 °C bis 100 °C Wasser erzeugende Substanz umfassen. Es resultieren härtbare Polyurethanzusammensetzungen mit guten Verarbeitungseigenschaften, insbesondere einer langen Offenzeit, die einerseits nach der Applikation bei genügender Wärmezufuhr sehr rasch aushärten, und die andererseits bei ungenügender oder ausbleibender Wärmezufuhr trotzdem aus- bzw. nachhärten, wobei als Ergebnis der beiden Aushärtungsverfahren ein Material mit vergleichbar guten mechanischen Eigenschaften erhalten wird.

## Beschreibung

### Technisches Gebiet

Die Erfindung betrifft das Gebiet der feuchtigkeitsreaktiven Polyurethanzusammensetzungen und deren Anwendung, insbesondere als Klebstoff, Dichtstoff oder Beschichtung.

### Stand der Technik

Einkomponentige feuchtigkeitsreaktive Polyurethanzusammensetzungen mit freien Isocyanatgruppen werden seit langem als Kleb- und Dichtstoffe und als Beschichtungsmaterialien eingesetzt. Solche Systeme sind einfach in der Anwendung, da keine Mischprozesse notwendig und die Offenzeiten lang sind. Sie härten allerdings langsam aus, da die zur Aushärtung benötigte Feuchtigkeit durch Diffusionsprozesse aus der Luft in das Material eindringen muss, was beim Voranschreiten der Aushärtung gegen innen zunehmend langsamer vor sich geht.

Für gewisse Anwendungen werden Systeme gewünscht, die einerseits eine ausreichend lange Offenzeit aufweisen, um eine genaue und sichere Verarbeitung zu gewährleisten, andererseits aber sehr schnell aushärten, um schon kurze Zeit nach der Applikation belast- oder bearbeitbar zu werden, beispielsweise damit mit einem Klebstoff gefügte Teile bewegt oder fixierende Halterungen entfernt werden können, oder damit eine aufgetragene Beschichtung begangen, nachbeschichtet oder abgeschliffen werden kann. Insbesondere in der industriellen Fertigung wird die Forderung nach rascher Aushärtung bzw. hoher "Frühfestigkeit" erhoben, um kurze Taktzeiten zu erzielen. Es ist schwierig, diese Vorgaben mit einkomponentigen feuchtigkeitsreaktiven Polyurethanzusammensetzungen zu erfüllen. Deren Aushärtung kann mittels Wärme und/oder dem Einsatz starker Katalysatoren zwar bis zu einem gewissen Grad beschleunigt werden; Aushärtungsgeschwindigkeiten im Minuten- oder gar im Sekundenbereich sind so aber nicht erreichbar, und es sind Nachteile in Bezug auf Lagerstabilität, Endfestigkeit oder Haftung zu gewärtigen. Durch Zumischen einer zweiten, Wasser enthaltenden Komponente bei der Applikation kann die Aushärtung stark beschleunigt werden; dies geht aber insbesondere auf Kosten der Offenzeit. Eine kurze Offenzeit ist auch das Problem von klassischen zweikomponentigen Polyurethanzusammensetzungen, welche primär ohne Wasser aushärten; deren Eigenschaften sind zudem stark von der Einhaltung eines genauen stöchiometrischen Mischungsverhältnisses sowie der Mischqualität abhängig.

Hohe Aushärtungsgeschwindigkeiten bei gleichzeitig langer Offenzeit lassen sich insbesondere mit heisshärtenden Polyurethanzusammensetzungen, sogenannten Hotcures, erzielen. In den meisten Hotcures liegen die Isocyanatgruppen in blockierter, thermisch aktivierbarer Form vor. Seit langem bekannt sind dabei Zusammensetzungen, in denen die Isocyanatgruppen chemisch blockiert sind, wobei als Blockierungsmittel beispielsweise Phenole, Oxime oder Lactame eingesetzt werden. Weiterhin bekannt sind Zusammensetzungen, welche feinteilige feste Isocyanate enthalten, die durch Behandlung mit Aminen oberflächendesaktiviert wurden, zum Beispiel aus EP 0 062 780 A1, EP 0 100 508 A2 und EP 0 153 579 A2. Diese bekannten Systeme haben jedoch den Nachteil, dass sie gar nicht oder nicht vollständig, oder zu einem mechanisch ungenügenden Material, aushärten, wenn sie nicht ausreichend lang oder ungenügend hoch erwärmt werden. Zudem können die bei der Aushärtung freigesetzten Blockierungsmittel wie Phenole oder Oxime zur Bildung von toxischen Dämpfen und störenden Gerüchen führen, was besonders bei einer Verwendung der Zusammensetzungen in Innenräumen ein Nachteil sein kann.

Weiterhin bekannt sind heisshärtende Polyurethanzusammensetzungen, welche neben Polyurethanpolymeren mit freien Isocyanatgruppen einen thermisch aktivierbaren Härter enthalten. In US 4,663,415 und EP 0 757 067 A1 beispielsweise sind dies feinteilige feste Amine, welche an ihrer Oberfläche beschichtet wurden; in EP 0 255 572 A1 und WO 88/06165 A1 sind dies komplexierte Amine, insbesondere die Komplexverbindung aus Methylendianilin und Natriumchlorid. Diese Systeme härten zwar auch mittels Feuchtigkeit aus, bzw. nach, wenn die Wärmezufuhr ausbleibt, bzw. für die vollständige Vernetzung nicht ausreicht. Im Vergleich mit der Heisshärtung entsteht dabei aber ein in Bezug auf die mechanischen Eigenschaften unterschiedliches Material, da der Härter nicht, bzw. nur teilweise, ins Polymer eingebaut wird. Der Anteil an nicht eingebautem Härter kann aber nachträglich aus der Zusammensetzung migrieren oder verdampfen, was aufgrund der Toxizität einiger Härter, wie insbesondere der erwähnten Komplexverbindung auf Basis eines aromatischen Amins, ein schwerwiegendes Problem darstellt. Ausserdem sind diese Systeme wegen der oft nicht vollständig gelingenden Blockierung oder leichten Zersetzung der Härter im Allgemeinen nur eingeschränkt lagerfähig.

### Darstellung der Erfindung

Aufgabe der vorliegenden Erfindung ist es daher, eine härtbare Polyurethanzusammensetzung mit guten Verarbeitungseigenschaften, insbesondere einer langen Offenzeit, zur Verfügung zu stellen, die einerseits nach der Applikation bei genügender Wärmezufuhr sehr rasch aushärtet, und die andererseits bei ungenügender oder ausbleibender Wärmezufuhr trotzdem aus- bzw. nachhärtet, wobei als Ergebnis der beiden Aushärtungsverfahren ein Material mit vergleichbar guten mechanischen Eigenschaften erhalten wird.

Überraschenderweise lässt sich diese Aufgabe mittels einer härtbaren Zusammensetzung gemäss Anspruch 1 lösen. Eine solche Zusammensetzung verfügt über eine gut handhabbare Offenzeit, sofern sie bei Raumtemperatur angewendet wird, und härtet bei Raumtemperatur mittels Luftfeuchtigkeit zu einem elastischen Material mit hoher Endfestigkeit aus. Wird die applizierte Zusammensetzung aufgeheizt, so wird aus der in der Zusammensetzung vorhandenen Wasser erzeugenden Substanz Wasser erzeugt, was zu einer sehr schnellen und trotzdem blasenfreien Aushärtung der Zusammensetzung führt. Das System weist neben der sehr schnellen und blasenfreien Aushärtung den grossen Vorteil auf, dass es auch bei unzureichender Wärmezufuhr zu einem Material mit nahezu den gleichen Eigenschaften, insbesondere mit vergleichbaren mechanischen Eigenschaften, aushärtet. Werden als in der Zusammensetzung vorhandenes blockiertes Amin die bevorzugten Oxazolidine oder Aldimine eingesetzt, so ist die Zusammensetzung auch als einkomponentiges System lagerstabil. Werden als blockiertes Amin die am meisten bevorzugten speziellen Aldimine auf Basis von Estern von 2,2-disubstituierten 3-Hydroxyaldehyden mit langkettigen Carbonsäuren eingesetzt, so weist die Zusammensetzung weiterhin den grossen Vorteil auf, dass sie vor, während und nach der Aushärtung geruchsarm oder geruchsfrei ist, und dass der aus dem Aldimin freigesetzte Aldehyd nahezu vollständig in der ausgehärteten Zusammensetzung verbleibt, wodurch diese kaum Schwund aufweist.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Gegenstand der Erfindung ist eine härtbare Zusammensetzung umfassend
a) mindestens ein Isocyanatgruppen aufweisendes Polymer **P,**
b) mindestens ein blockiertes Amin **BA,** welches eine blockierte, hydrolytisch aktivierbare Aminogruppe und entweder mindestens eine weitere blockierte, hydrolytisch aktivierbare Aminogruppe oder mindestens eine Reaktivgruppe **R,** ausgewählt aus der Gruppe bestehend aus Hydroxylgruppe, Mercaptogruppe und sekundäre Aminogruppe, aufweist, und
c) mindestens eine feinteilige, bei Raumtemperatur feste, bei Erwärmung auf eine Mindesttemperatur im Bereich von 50 °C bis 100 °C Wasser erzeugende Substanz **W.**

Der Begriff "Polymer" umfasst im vorliegenden Dokument einerseits ein Kollektiv von chemisch einheitlichen, sich aber in Bezug auf Polymerisationsgrad, Molmasse und Kettenlänge unterscheidenden Makromolekülen, das durch eine Polyreaktion (Polymerisation, Polyaddition, Polykondensation) hergestellt wurde. Der Begriff umfasst andererseits auch Derivate eines solchen Kollektivs von Makromolekülen aus Polyreaktionen, Verbindungen also, die durch Umsetzungen, wie beispielsweise Additionen oder Substitutionen, von funktionellen Gruppen an vorgegebenen Makromolekülen erhalten wurden und die chemisch einheitlich oder chemisch uneinheitlich sein können. Der Begriff umfasst im Weiteren auch sogenannte Prepolymere, das heisst reaktive oligomere Voraddukte, deren funktionelle Gruppen am Aufbau von Makromolekülen beteiligt sind.

Der Begriff "Polyurethanpolymer" umfasst sämtliche Polymere, welche nach dem sogenannten Diisocyanat-Polyadditions-Verfahren hergestellt werden. Dies schliesst auch solche Polymere ein, die nahezu oder gänzlich frei sind von Urethangruppen. Beispiele für Polyurethanpolymere sind Polyether-Polyurethane, Polyester-Polyurethane, Polyether-Polyharnstoffe, Polyharnstoffe, Polyester-Polyharnstoffe, Polyisocyanurate und Polycarbodiimide.

Mit "Poly" beginnende Substanznamen wie Polyamin, Polyol oder Polyisocyanat bezeichnen im vorliegenden Dokument Substanzen, die formal zwei oder mehr der in ihrem Namen vorkommenden funktionellen Gruppen pro Molekül enthalten.

Der Begriff "primäre Aminogruppe" bezeichnet im vorliegenden Dokument eine Aminogruppe in der Form einer NH₂-Gruppe, die an einen organischen Rest gebunden ist. Der Begriff "sekundäre Aminogruppe" bezeichnet eine Aminogruppe, in der das Stickstoffatom an zwei organische Reste gebunden ist, welche auch gemeinsam Teil eines Rings sein können. Der Begriff "tertiäre Aminogruppe" bezeichnet eine Aminogruppe, in der das Stickstoffatom (= tertiärer Amin-Stickstoff) an drei organische Reste gebunden ist, wobei zwei dieser Reste auch gemeinsam Teil eines Rings sein können.

Als "aliphatisch" wird ein Amin und ein Isocyanat bezeichnet, deren Amino- und Isocyanatgruppen jeweils ausschliesslich an aliphatische, cycloaliphatische oder arylaliphatische Reste gebunden sind; entsprechend werden diese Gruppen als aliphatische Amino- und Isocyanatgruppen bezeichnet.

Als "aromatisch" wird ein Amin und ein Isocyanat bezeichnet, deren Amino- und Isocyanatgruppen jeweils an einen aromatischen Rest gebunden sind; entsprechend werden diese Gruppen als aromatische Amino- und Isocyanatgruppen bezeichnet.

Als "Raumtemperatur" wird im vorliegenden Dokument eine Temperatur von 25 °C bezeichnet.

Als "feinteilig" wird im vorliegenden Dokument eine Substanz, welche einen mittleren Teilchendurchmesser von kleiner als 120 µm, aufweist, bezeichnet.

Der Begriff "Endfestigkeit" bezeichnet im vorliegenden Dokument die Festigkeit der vollständig ausgehärteten Zusammensetzung, wobei mit Festigkeit insbesondere die Zugfestigkeit und das Elastizitätsmodul gemeint sind.

Unter einer "geruchsarmen" Substanz wird eine Substanz verstanden, deren Geruch von menschlichen Individuen nur in geringem Masse wahrnehmbar, d.h. riechbar, ist, die also keinen intensiven Geruch aufweist, und wobei dieser geringe Geruch von den meisten menschlichen Individuen nicht als unangenehm oder abstossend empfunden wird.

Unter einer "geruchsfreien" Substanz wird eine Substanz verstanden, die für die meisten menschlichen Individuen nicht riechbar ist, die also keinen wahrnehmbaren Geruch aufweist.

Die fett markierten Bezeichnungen wie **P, BA, R, W** oder dergleichen im vorliegenden Dokument dienen lediglich für das bessere Leseverständnis und Identifizierung.

Die härtbare Zusammensetzung umfasst mindestens ein Isocyanatgruppen aufweisendes Polymer **P.**

Als Isocyanatgruppen aufweisendes Polymer **P** geeignet ist insbesondere ein Polyurethanpolymer **PUP.** Das Polyurethanpolymer **PUP** ist insbesondere erhältlich aus der Umsetzung von mindestens einem Polyol mit mindestens einem Polyisocyanat. Diese Umsetzung kann dadurch erfolgen, dass das Polyol und das Polyisocyanat mit üblichen Verfahren, beispielsweise bei Temperaturen von 50 °C bis 100 °C, gegebenenfalls unter Mitverwendung geeigneter Katalysatoren, zur Reaktion gebracht werden, wobei das Polyisocyanat so dosiert ist, dass dessen Isocyanatgruppen im Verhältnis zu den Hydroxylgruppen des Polyols im stöchiometrischen Überschuss vorhanden sind. Vorteilhaft ist das Polyisocyanat so dosiert, dass ein NCO/OH-Verhältnis von 1.3 bis 5, insbesondere eines von 1.5 bis 3, eingehalten wird. Unter dem "NCO/OH-Verhältnis" wird das Verhältnis der Anzahl der eingesetzten Isocyanatgruppen zu der Anzahl der eingesetzten Hydroxylgruppen verstanden. Bevorzugt verbleibt im Polyurethanpolymer **PUP** nach der Umsetzung aller Hydroxylgruppen des Polyols ein Gehalt an freien Isocyanatgruppen von 0.5 bis 15 Gewichts-%, besonders bevorzugt von 0.5 bis 5 Gewichts-%.

Gegebenenfalls kann das Polyurethanpolymer **PUP** unter Mitverwendung von Weichmachern hergestellt werden, wobei die verwendeten Weichmacher keine gegenüber Isocyanaten reaktive Gruppen enthalten.

Als Polyol für die Herstellung des Polyurethanpolymers **PUP** können beispielsweise die folgenden handelsüblichen Polyole oder Mischungen davon eingesetzt werden:
- Polyoxyalkylenpolyole, auch Polyetherpolyole oder Oligoetherole genannt, welche Polymerisationsprodukte von Ethylenoxid, 1,2-Propylenoxid, 1,2-oder 2,3-Butylenoxid, Oxetan, Tetrahydrofuran oder Mischungen davon sind, eventuell polymerisiert mit Hilfe eines Startermoleküls mit zwei oder mehreren aktiven Wasserstoffatomen, wie beispielsweise Wasser, Ammoniak oder Verbindungen mit mehreren OH- oder NH-Gruppen wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, Bisphenol A, hydriertes Bisphenol A, 1,1,1-Trimethylolethan, 1,1,1-Trimethylolpropan, Glycerin, Anilin, sowie Mischungen der vorgenannten Verbindungen. Eingesetzt werden können sowohl Polyoxyalkylenpolyole, die einen niedrigen Ungesättigtheitsgrad aufweisen (gemessen nach ASTM D-2849-69 und angegeben in Milliequivalent Ungesättigtheit pro Gramm Polyol (mEq/g)), hergestellt beispielsweise mit Hilfe von sogenannten Double Metal Cyanide Complex-Katalysatoren (DMC-Katalysatoren), als auch Polyoxyalkylenpolyole mit einem höheren Ungesättigtheitsgrad, hergestellt beispielsweise mit Hilfe von anionischen Katalysatoren wie NaOH, KOH, CsOH oder Alkalialkoholaten. Besonders geeignet sind Polyoxyalkylendiole oder Polyoxyalkylentriole, insbesondere Polyoxyethylen- und Polyoxypropylendi- und -triole.
   Speziell geeignet sind Polyoxyalkylendiole und -triole mit einem Ungesättigtheitsgrad tiefer als 0.02 mEq/g und mit einem Molekulargewicht im Bereich von 1'000 - 30'000 g/mol, sowie Polyoxypropylendiole und -triole mit einem Molekulargewicht von 400 - 8'000 g/mol.
   Ebenfalls besonders geeignet sind sogenannte Ethylenoxid-terminierte ("EO-endcapped", ethylene oxide-endcapped) Polyoxypropylenpolyole. Letztere sind spezielle Polyoxypropylenpolyoxyethylenpolyole, die beispielsweise dadurch erhalten werden, dass reine Polyoxypropylenpolyole, insbesondere Polyoxypropylendiole und -triole, nach Abschluss der Polypropoxylierungsreaktion mit Ethylenoxid weiter alkoxyliert werden und dadurch primäre Hydroxylgruppen aufweisen.
- Styrol-Acrylnitril- oder Acrylnitril-Methylmethacrylat-gepfropfte Polyetherpolyole.
- Polyesterpolyole, auch Oligoesterole genannt, hergestellt nach bekannten Verfahren, insbesondere der Polykondensation von Hydroxycarbonsäuren oder der Polykondensation von aliphatischen und/oder aromatischen Polycarbonsäuren mit zwei- oder mehrwertigen Alkoholen.
   Als Polyesterpolyole insbesondere geeignet sind solche, welche hergestellt sind aus zwei- bis dreiwertigen, insbesondere zweiwertigen, Alkoholen, wie beispielsweise Ethylenglykol, Diethylenglykol, Propylenglykol, Dipropylenglykol, Neopentylglykol, 1,4-Butandiol, 1,5-Pentandiol, 3-Methyl-1,5-hexandiol, 1,6-Hexandiol, 1,8-Octandiol, 1,10-Decandiol, 1,12-Dodecandiol, 1,12-Hydroxystearylalkohol, 1,4-Cyclohexandimethanol, Dimerfettsäurediol (Dimerdiol), Hydroxypivalinsäureneopentylglykolester, Glycerin, 1,1,1-Trimethylolpropan oder Mischungen der vorgenannten Alkohole, mit organischen Di- oder Tricarbonsäuren, insbesondere Dicarbonsäuren, oder deren Anhydride oder Ester, wie beispielsweise Bernsteinsäure, Glutarsäure, Adipinsäure, Trimethyladipinsäure, Korksäure, Azelainsäure, Sebacinsäure, Dodecandicarbonsäure, Maleinsäure, Fumarsäure, Dimerfettsäure, Phthalsäure, Phthalsäureanhydrid, Isophthalsäure, Terephthalsäure, Dimethylterephthalat, Hexahydrophthalsäure, Trimellithsäure und Trimellithsäureanhydrid, oder Mischungen der vorgenannten Säuren, sowie Polyesterpolyole aus Lactonen wie beispielsweise aus ε-Caprolacton und Startern wie den vorgenannten zwei- oder dreiwertigen Alkoholen.
   Besonders geeignete Polyesterpolyole sind Polyesterdiole.
- Polycarbonatpolyole, wie sie durch Umsetzung beispielsweise der oben genannten - zum Aufbau der Polyesterpolyole eingesetzten - Alkohole mit Dialkylcarbonaten, Diarylcarbonaten oder Phosgen zugänglich sind.
- Mindestens zwei Hydroxylgruppen tragende Blockcopolymere, welche mindestens zwei verschiedene Blöcke mit Polyether-, Polyester- und/oder Polycarbonatstruktur der oben beschriebenen Art aufweisen, insbesondere Polyetherpolyesterpolyole.
- Polyacrylat- und Polymethacrylatpolyole.
- Polyhydroxyfunktionelle Fette und Öle, beispielsweise natürliche Fette und Öle, inbesondere Ricinusöl; oder durch chemische Modifizierung von natürlichen Fetten und Ölen gewonnene - sogenannte oleochemische - Polyole, beispielsweise die durch Epoxidierung ungesättigter Öle und anschliessender Ringöffnung mit Carbonsäuren bzw. Alkoholen erhaltenen Epoxypolyester bzw. Epoxypolyether, oder durch Hydroformylierung und Hydrierung ungesättigter Öle erhaltene Polyole, oder aus natürlichen Fetten und Ölen durch Abbauprozesse wie Alkoholyse oder Ozonolyse und anschliessender chemischer Verknüpfung, beispielsweise durch Umesterung oder Dimerisierung, der so gewonnenen Abbauprodukte oder Derivaten davon erhaltene Polyole. Geeignete Abbauprodukte von natürlichen Fetten und Ölen sind insbesondere Fettsäuren und Fettalkohole sowie Fettsäureester, insbesondere die Methylester (FAME), welche beispielsweise durch Hydroformylierung und Hydrierung zu Hydroxyfettsäureestern derivatisiert werden können.
- Polykohlenwasserstoffpolyole, auch Oligohydrocarbonole genannt, wie beispielsweise polyhydroxyfunktionelle Polyolefine, Polyisobutylene, Polyisoprene; polyhydroxyfunktionelle Ethylen-Propylen-, Ethylen-Butylen- oder Ethylen-Propylen-Dien-Copolymere, wie sie beispielsweise von der Firma Kraton Polymers hergestellt werden; polyhydroxyfunktionelle Polymere von Dienen, insbesondere von 1,3-Butadien, welche insbesondere auch aus anionischer Polymerisation hergestellt sein können; polyhydroxyfunktionelle Copolymere aus Dienen wie 1,3-Butadien oder Diengemischen und Vinylmonomeren wie Styrol, Acrylonitril, Vinylchlorid, Vinylacetat, Vinylalkohol, Isobutylen und Isopren, beispielsweise polyhydroxyfunktionelle Acrylonitril/Butadien-Copolymere, wie sie beispielsweise aus Epoxiden oder Aminoalkoholen und carboxylterminierten Acrylonitril/Butadien-Copolymeren (beispielsweise kommerziell erhältlich unter dem Namen Hypro^{®} (früher Hycar^{®}) CTBN und CTBNX und ETBN von Nanoresins AG, bzw. Emerald Performance Materials LLC) hergestellt werden können; sowie hydrierte polyhydroxyfunktionelle Polymere oder Copolymere von Dienen.

Diese genannten Polyole weisen bevorzugt ein mittleres Molekulargewicht von 250 bis 30'000 g/mol, insbesondere von 400 bis 20'000 g/mol, und bevorzugt eine mittlere OH-Funktionalität im Bereich von 1.6 bis 3 auf.

Als Polyole bevorzugt sind Polyether-, Polyester-, Polycarbonat- und Polyacrylatpolyole, bevorzugt Di- und Triole. Besonders bevorzugt sind Polyetherpolyole, insbesondere Polyoxypropylen- und Polyoxypropylenpolyoxyethylenpolyole, sowie flüssige Polyesterpolyole und Polyetherpolyesterpolyole.

Zusätzlich zu diesen genannten Polyolen können kleine Mengen von niedrigmolekularen zwei- oder mehrwertigen Alkoholen wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, hydriertes Bisphenol A, dimere Fettalkohole, 1,1,1-Trimethylolethan, 1,1,1-Trimethylolpropan, Glycerin, Pentaerythrit, Zuckeralkohole wie Xylit, Sorbit oder Mannit, Zucker wie Saccharose, andere höherwertige Alkohole, niedrigmolekulare Alkoxylierungsprodukte der vorgenannten zwei- und mehrwertigen Alkohole, sowie Mischungen der vorgenannten Alkohole bei der Herstellung des Polyurethanpolymers PUP mitverwendet werden. Ebenso können kleine Mengen an Polyolen mit einer mittleren OH-Funktionalität von mehr als 3 mitverwendet werden, beispielsweise Zuckerpolyole.

Als Polyisocyanat für die Herstellung eines Isocyanatgruppen aufweisenden Polyurethanpolymers **PUP** werden aromatische oder aliphatische Polyisocyanate, insbesondere die Diisocyanate, eingesetzt.

Als aromatische Polyisocyanate eignen sich insbesondere monomere Di- oder Triisocyanate wie 2,4- und 2,6-Toluylendiisocyanat und beliebige Gemische dieser Isomeren (TDI), 4,4'-, 2,4'- und 2,2'-Diphenylmethandiisocyanat und beliebige Gemische dieser Isomeren (MDI), Gemische aus MDI und MDI-Homologen (polymeres MDI oder PMDI), 1,3- und 1,4-Phenylendiisocyanat, 2,3,5,6-Tetramethyl-1,4-diisocyanatobenzol, Naphthalin-1,5-diisocyanat (NDI), 3,3'-Dimethyl-4,4'-diisocyanatodiphenyl (TODI), Dianisidindiisocyanat (DADI), 1,3,5-Tris-(isocyanatomethyl)-benzol, Tris-(4-isocyanatophenyl)-methan, Tris-(4-isocyanatophenyl)-thiophosphat, Oligomere und Polymere der vorgenannten Isocyanate, sowie beliebige Mischungen der vorgenannten Isocyanate. Bevorzugt sind MDI und TDI.

Als aliphatische Polyisocyanate eignen sich insbesondere monomere Di- oder Triisocyanate wie 1,4-Tetramethylendiisocyanat, 2-Methylpentamethylen-1,5-diisocyanat, 1,6-Hexamethylendiisocyanat (HDI), 2,2,4- und 2,4,4-Trimethyl-1,6-hexamethylendiisocyanat (TMDI), 1,10-Decamethylendiisocyanat, 1,12-Dodecamethylendiisocyanat, Lysin- und Lysinesterdiisocyanat, Cyclohexan-1,3- und -1,4-diisocyanat, 1-Methyl-2,4- und -2,6-diisocyanatocyclohexan und beliebige Gemische dieser Isomeren (HTDI oder H₆TDI), 1-Isocyanato-3,3,5-trimethyl-5-isocyanatomethyl-cyclohexan (=Isophorondiisocyanat oder IPDI), Perhydro-2,4'- und -4,4'-diphenylmethandiisocyanat (HMDI oder H₁₂MDI), 1,4-Diisocyanato-2,2,6-trimethylcyclohexan (TMCDI), 1,3- und 1,4-Bis-(isocyanatomethyl)-cyclohexan, m- und p-Xylylendiisocyanat (m- und p-XDI), m- und p-Tetramethyl-1,3- und -1,4-xylylendiisocyanat (m- und p-TMXDI), Bis-(1-Isocyanato-l-methylethyl)-naphthalin, Dimer- und Trimerfettsäureisocyanate wie 3,6-Bis-(9-isocyanatononyl)-4,5-di-(1-heptenyl)-cyclohexen (Dimeryldiisocyanat), α,α,α',α',α",α"-Hexamethyl-1,3,5-mesitylentriisocyanat, Oligomere und Polymere der vorgenannten Isocyanate, sowie beliebige Mischungen der vorgenannten Isocyanate. Bevorzugt sind HDI und IPDI.

Als Polyisocyanat für die Herstellung eines Isocyanatgruppen aufweisenden Polyurethanpolymer **PUP** besonders bevorzugt sind aromatische Polyisocyanate, insbesondere MDI.

Das Polyurethanpolymer **PUP** weist ein mittleres Molekulargewicht von vorzugsweise 500 g/mol oder darüber auf. Insbesondere weist das Polyurethanpolymer **PUP** ein mittleres Molekulargewicht von 1000 bis 30'000 g/mol, bevorzugt von 2000 bis 10'000 g/mol, auf. Weiterhin weist das Polyurethanpolymer **PUP** bevorzugt eine mittlere NCO-Funktionalität im Bereich von 1.7 bis 3, insbesondere 1.8 bis 2.5, auf.

Üblicherweise ist das Isocyanatgruppen aufweisende Polymer **P** in einer Menge von 5 bis 95 Gewichts-%, bevorzugt in einer Menge von 10 bis 90 Gewichts-%, bezogen auf die gesamte Zusammensetzung, vorhanden. In gefüllten Zusammensetzungen, d.h. Zusammensetzungen, welche einen Füllstoff enthalten, ist das Isocyanatgruppen aufweisende Polymer **P** bevorzugt in einer Menge von 5 bis 60 Gewichts-%, insbesondere 10 bis 50 Gewichts-%, bezogen auf die gesamte Zusammensetzung, vorhanden.

Die härtbare Zusammensetzung umfasst neben mindestens einem Isocyanatgruppen aufweisende Polymer **P** weiterhin mindestens ein blockiertes Amin **BA,** welches eine blockierte, hydrolytisch aktivierbare Aminogruppe und entweder mindestens eine weitere blockierte, hydrolytisch aktivierbare Aminogruppe oder mindestens eine Reaktivgruppe **R,** ausgewählt aus der Gruppe bestehend aus Hydroxylgruppe, Mercaptogruppe und sekundäre Aminogruppe, aufweist.

Die blockierten, hydrolytisch aktivierbaren Aminogruppen des blockierten Amins **BA** sind insbesondere ausgewählt aus der Gruppe bestehend aus Enaminogruppen, Oxazolidinogruppen, Ketiminogruppen und Aldiminogruppen. Solche blockierten Amine **BA** sind in der Polyurethanchemie bekannte Substanzen, die als sogenannte latente Härter in Isocyanatgruppen aufweisenden Zusammensetzungen verwendet werden.

Als "Oxazolidinogruppe" werden im vorliegenden Dokument sowohl die Tetrahydrooxazol-Gruppe (5-Ring) als auch die Tetrahydrooxazin-Gruppe (6-Ring) bezeichnet.

Das blockierte Amin **BA** ist insbesondere aus der Kondensationsreaktion von einem primären oder sekundären Amin mit einem Keton oder Aldehyd erhältlich. Als Keton geeignet sind insbesondere Aceton, Methylethylketon, Methylpropylketon, Methylisopropylketon, Methylisobutylketon, Methylpentylketon, Methylisopentylketon, Diethylketon, Dipropylketon, Diisopropylketon, Dibutylketon, Diisobutylketon, Cyclopentanon, Cyclohexanon und Actetophenon. Als Aldehyd geeignet sind insbesondere Formaldehyd, Acetaldehyd, Propanal, 2-Methylpropanal, Butanal, 2-Methylbutanal, 2-Ethylbutanal, Pentanal, 2-Methylpentanal, 3-Methylpentanal, 4-Methylpentanal, 2,3-Dimethylpentanal, Hexanal, 2-Ethyl-hexanal, Heptanal, Octanal, Nonanal, Decanal, Undecanal, 2-Methyl-undecanal, Dodecanal, Methoxyacetaldehyd, Cyclopropancarboxaldehyd, Cyclopentancarboxaldehyd, Cyclohexancarboxaldehyd, Diphenylacetaldehyd, Benzaldehyd und substituierte Benzaldehyde, sowie weiterhin Aldehyde **ALD** der Formel (IX), wie sie weiter hinten in diesem Dokument erwähnt werden.

Ein mindestens eine Enaminogruppe aufweisendes blockiertes Amin **BA** ist insbesondere erhältlich aus der Kondensationsreaktion von einem mindestens eine sekundäre Aminogruppe aufweisenden Amin mit mindestens einem Keton oder Aldehyd, welches in α-Stellung zur Carbonylgruppe mindestens ein Wasserstoffatom aufweist und damit enolisierbar ist, insbesondere den Ketonen Aceton, Methylethylketon, Methylpropylketon, Methylisopropylketon, Methylisobutylketon, Methylpentylketon, Methylisopentylketon, Diethylketon, Dipropylketon, Diisopropylketon, Dibutylketon, Diisobutylketon, Cyclopentanon, Cyclohexanon und den Aldehyden Acetaldehyd, Propanal, 2-Methylpropanal, Butanal, 2-Methylbutanal, 2-Ethylbutanal, Pentanal, 2-Methylpentanal, 3-Methylpentanal, 4-Methylpentanal, 2,3-Dimethylpentanal, Hexanal, 2-Ethyl-hexanal, Heptanal, Octanal, Nonanal, Decanal, Undecanal, 2-Methyl-undecanal, Dodecanal, Methoxyacetaldehyd, Cyclopropancarboxaldehyd, Cyclopentancarboxaldehyd, Cyclohexancarboxaldehyd, Diphenylacetaldehyd. Als mindestens eine sekundäre Aminogruppe aufweisendes Amin geeignet sind einerseits Amine mit mindestens zwei sekundären Aminogruppen, insbesondere Piperazin, 2,5- und 2,6-Dimethylpiperazin, 2,3,5,6-Tetramethylpiperazin, 1,7-Dioxa-4,10-diazacyclododecan, N,N'-Dibutylethylendiamin; N,N'-Di-tert.butyl-ethylendiamin, N,N'-Dimethyl-1,6-hexandiamin, N,N'-Diethyl-1,6-hexandiamin, N,N'-Dimethyl-diethylentriamin, N,N'-Dimethyl-dipropylentriamin, 1-(1-Methylethyl-amino)-3-(1-methylethyl-aminomethyl)-3,5,5-trimethylcyclohexan (Jefflink^{®} 754 von Huntsman), N4-Cyclohexyl-2-methyl-N2-(2-methylpropyl)-2,4-pentandiamin, N,N'-Dialkyl-1,3-xylylendiamin, Bis-(4-(N-alkylamino)-cyclohexyl)-methan, 4,4'-Trimethylen-dipiperidin und N-alkylierte Polyetheramine, beispielsweise Jeffamine^{®}-SD-231 (von Huntsman); weiterhin Amine mit einer Hydroxylgruppe und einer sekundären Aminogruppe, insbesondere N-(2-Hydroxyethyl)-piperazin, 4-Hydroxy-piperidin, sowie monoalkoxylierte primäre Monoamine, wie insbesondere N-Methyl-ethanolamin, N-Ethylethanolamin, N-Butyl-ethanolamin und N-Butyl-isopropanolamin; weiterhin Amine mit einer Mercaptogruppe und einer sekundären Aminogruppe, insbesondere N-(2-Mercaptoethyl)-piperazin, 4-Mercapto-piperidin und 2-Mercaptoethyl-butylamin.

Ein mindestens eine Oxazolidinogruppe aufweisendes blockiertes Amin **BA** ist insbesondere erhältlich aus der Kondensationsreaktion von mindestens einem Hydroxyamin, in welchem die Hydroxyl- und die primäre Aminogruppe durch einen, gegebenenfalls substituierten, Ethylen- oder Propylenrest getrennt sind, mit mindestens einem Keton oder Aldehyd, insbesondere Formaldehyd oder einem der genannten enolisierbaren Ketone oder Aldehyde; besonders geeignet sind die Aldehyde, insbesondere 2-Methylpropanal. Als Hydroxyamin geeignet sind insbesondere Diethanolamin und Diisopropanolamin, die zu Hydroxyoxazolidinen führen, aus welchen leicht Polyoxazolidine hergestellt werden können, beispielsweise durch Umsetzung mit einem Polyisocyanat oder einem Polyester.

Als blockiertes Amin **BA** bevorzugt ist in einer Ausführungsform ein Oxazolidin **BA1,** welches eine Oxazolidinogruppe und entweder mindestens eine weitere blockierte, hydrolytisch aktivierbare Aminogruppe oder mindestens eine Reaktivgruppe **R** aufweist.

Geeignete kommerzielle Oxazolidine sind beispielsweise Härter OZ (von Bayer), Zoldine^{®} RD-4 (von Angus Chemical), sowie Incozol^{®} 3, Incozol^{®} LV, Incozol^{®} 4, Incozol^{®} HP und Incozol^{®} NC (von Industrial Copolymers).

Ein mindestens eine Ketiminogruppe oder Aldiminogruppe aufweisendes blockiertes Amin **BA** ist insbesondere erhältlich aus der Kondensationsreaktion von einem mindestens eine primäre Aminogruppe aufweisenden Amin mit mindestens einem Keton oder Aldehyd, wie es vorgängig erwähnt wurde. Wird zur Blockierung einer primären Aminogruppe ein Keton eingesetzt, so wird eine Ketiminogruppe gebildet, während beim Einsatz eines Aldehyds eine Aldiminogruppe gebildet wird. Als mindestens eine primäre Aminogruppe aufweisendes Amin geeignet sind insbesondere Amine **B1** der Formel (VIII a) und Amine **B2** der Formel (VIII b), wie sie weiter hinten in diesem Dokument erwähnt sind.

Geeignete kommerzielle Ketimine und Aldimine sind beispielsweise Epikure^{®} Curing Agent 3502 (von Resolution Performance Products), Desmophen^{®} LS 2965A (von Bayer) und Vestamin^{®} A 139 (von Evonik Degussa).

Speziell bevorzugt als blockiertes Amin **BA** ist in einer Ausführungsform ein Aldimin **BA2** der Formel (I), 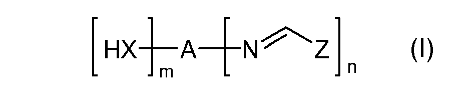 wobei
n für 1 oder 2 oder 3 oder 4 steht, und
m für 0 oder 1 steht,
mit der Massgabe, dass m+n für 2 oder 3 oder 4 steht;
und wobei
- A: entweder für einen m+n-wertigen Kohlenwasserstoffrest mit 2 bis 30 C- Atomen, welcher gegebenenfalls mindestens ein Heteroatom, ins- besondere in der Form von Ether-Sauerstoff oder tertiärem Amin- Stickstoff, enthält, steht, oder zusammen mit R⁷ für einen (n+2)-wertigen Kohlenwasserstoffrest mit 3 bis 30 C-Atomen, welcher gegebenenfalls mindestens ein Heteroatom, insbesondere in der Form von Ether-Sauerstoff oder tertiärem Amin-Stickstoff, enthält, steht;
- X: für O oder S oder N-R⁶ oder N-R⁷ steht,
wobei R⁶
entweder für einen einwertigen Kohlenwasserstoffrest mit 1 bis 20 C-Atomen, welcher gegebenenfalls mindestens eine Carbonsäureester-, Nitril-, Nitro-, Phosphonsäureester-, Sulfon- oder Sulfonsäureester-Gruppe aufweist, steht,
oder für einen Substituenten der Formel (II) steht, 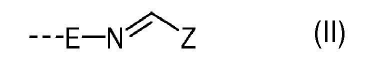 wobei
E für einen zweiwertigen, gegebenenfalls Ether-Sauerstoff oder tertiären Amin-Stickstoff aufweisenden, Kohlenwasserstoffrest mit 2 bis 12 C-Atomen steht, und
R⁷ zusammen mit A für einen (n+2)-wertigen Kohlenwasserstoffrest mit 3 bis 30 C-Atomen, welcher gegebenenfalls mindestens ein Heteroatom, insbesondere in Form von Ether-Sauerstoff oder tertiärem Amin-Stickstoff, enthält, steht; und
- Z: frei ist von Reaktivgruppen **R** und von primären Aminogruppen und entweder für einen Rest Z¹ der Formel (III) steht 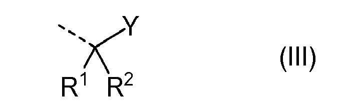 wobei
Y für einen einwertigen Kohlenwasserstoffrest mit 1 bis 32 C-Atomen steht, welcher gegebenenfalls mindestens ein Heteroatom, insbesondere Sauerstoff oder Stickstoff in der Form von Ether-, Carbonyl-, Ester-, Amido-, Harnstoff-, Urethan- oder tertiären Aminogruppen, aufweist, und
R¹ und R² entweder
unabhängig voneinander jeweils für einen einwertigen Kohlenwasserstoffrest mit 1 bis 12 C-Atomen stehen,
oder zusammen für einen zweiwertigen Kohlenwasserstoffrest mit 4 bis 12 C-Atomen, der Teil eines, gegebenenfalls substituierten, carbocyclischen Rings mit 5 bis 8, bevorzugt 6, C-Atomen ist, stehen,
oder für einen Rest Z² steht,
wobei Z² entweder für einen substituierten oder unsubstituierten Aryl- oder Heteroaryl-Rest, welcher eine Ringgrösse von 5 bis 8, bevorzugt 6, Atomen aufweist, steht,
oder für 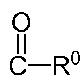 steht,
wobei R⁰ für ein Wasserstoffatom oder für einen Alkoxyrest oder für einen substituierten oder unsubstituierten Alkenyl- oder Arylalkenylrest mit mindestens 6 C-Atomen steht.

Die gestrichelten Linien in den Formeln in diesem Dokument stellen jeweils die Bindung zwischen einem Substituenten und dem zugehörigen Molekülrest dar.

Das Aldimin **BA2** der Formel (I) weist Aldiminogruppen auf, welche am in α-Stellung zur Carbonylgruppe stehenden C-Atom kein Wasserstoffatom tragen und deshalb nicht zu Enaminogruppen tautomerisieren können. Dadurch stellen diese Aldiminogruppen besonders gut geschützte ("blockierte") primäre Aminogruppen dar, welche unter Ausschluss von Feuchtigkeit mit Isocyanatgruppen keine oder nur äusserst geringe Reaktivität zeigen. Dadurch sind diese Aldimine zusammen mit Isocyanatgruppen aufweisenden Verbindungen im Allgemeinen besonders gut lagerfähig.

Bevorzugt steht m für 0.

Bevorzugt enthält A keine Reaktivgruppen R und keine primären Aminogruppen.

Bevorzugt steht Z für Z¹.

Bevorzugt stehen R¹ und R² jeweils für einen Methylrest.

Bevorzugt steht Z¹ für einen Rest der Formel (III a) oder (III b) oder (III c) oder (III d), 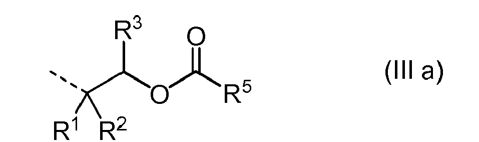 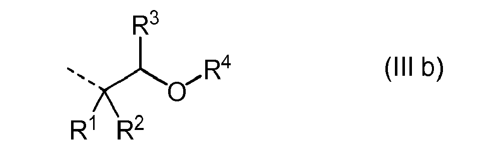 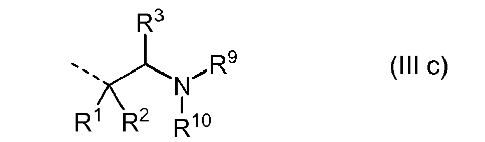 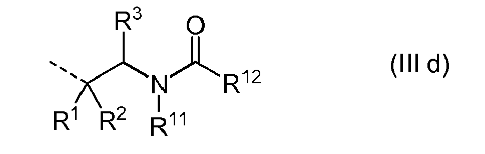 wobei
- R³: für ein Wasserstoffatom oder für eine Alkylgruppe oder für eine Cycloalkylgruppe oder für eine Arylalkylgruppe mit 1 bis 12 C-Atomen steht;
- R⁴: für einen Kohlenwasserstoffrest mit 1 bis 30 C-Atomen, welcher gegebenenfalls Ether-Sauerstoff enthält, steht;
- R⁵: entweder
für ein Wasserstoffatom steht,
oder für einen linearen oder verzweigten Alkylrest mit 1 bis 30 C- Atomen, gegebenenfalls mit cyclischen Anteilen und gegebenenfalls mit mindestens einem Heteroatom, insbesondere Sauerstoff in der Form von Ether-, Carbonyl- oder Ester-Gruppen, steht,
oder für einen einfach oder mehrfach ungesättigten, linearen oder verzweigten Kohlenwasserstoffrest mit 5 bis 30 C-Atomen steht, oder für einen, gegebenenfalls substituierten, aromatischen oder heteroaromatischen 5- oder 6-gliedrigen Ring steht;
- R⁹ und R¹⁰: entweder unabhängig voneinander jeweils für einen einwertigen aliphatischen, cycloaliphatischen oder arylaliphatischen Rest mit 1 bis 20 C- Atomen, welcher gegebenenfalls Heteroatome in der Form von Ether-Sauerstoff oder tertiärem Amin-Stickstoff enthält, stehen, oder zusammen für einen zweiwertigen aliphatischen Rest mit 3 bis 20 C-Atomen, der Teil eines, gegebenenfalls substituierten, hetero- cyclischen Rings mit 5 bis 8, bevorzugt 6, Ringatomen ist und neben dem Stickstoffatom gegebenenfalls weitere Heteroatome in der Form von Ether-Sauerstoff oder tertiärem Amin-Stickstoff enthält, stehen; und
- R¹¹ und R¹²: entweder
zusammen für einen, gegebenenfalls Sauerstoff- oder Schwefel- atome aufweisenden, zweiwertigen Rest mit 2 bis 10 C-Atomen, der Teil eines, gegebenenfalls substituierten, 5- oder 6- oder 7- gliedrigen Rings ist, stehen,
oder
R¹¹ für einen Alkyl-, Cycloalkyl-, Arylalkyl- oder Acylrest mit 1 bis 10 C-Atomen steht, und
R¹² für ein Wasserstoffatom oder für einen einwertigen Rest mit 1 bis 20 C-Atomen, welcher ausgewählt ist aus der Gruppe bestehend aus Alkyl-, Cycloalkyl-, Arylalkyl-, Arylrest, -OR^{12'}, -SR^{12'} und - NR^{12'}R^{12"}, steht,
   wobei R^{12'} und R^{12"} entweder jeweils für einen Kohlenwasserstoffrest oder zusammen für einen Alkylenrest, der Teil eines 5-, 6- oder 7-gliedrigen Rings ist, stehen.

Bevorzugt steht R³ für ein Wasserstoffatom.

Bevorzugt steht R⁴ für einen Kohlenwasserstoffrest mit 6 bis 30, insbesondere mit 11 bis 30, C-Atomen, welcher gegebenenfalls Ether-Sauerstoff enthält.

Bevorzugt steht R⁵ für einen linearen oder verzweigten Alkylrest mit 6 bis 30, insbesondere mit 11 bis 30, C-Atomen, gegebenenfalls mit cyclischen Anteilen und gegebenenfalls mit mindestens einem Heteroatom, oder für einen einfach oder mehrfach ungesättigten, linearen oder verzweigten Kohlenwasserstoffrest mit 6 bis 30, insbesondere mit 11 bis 30, C-Atomen.

Bevorzugt stehen R⁹ und R¹⁰ jeweils unabhängig voneinander für Methyl, Ethyl, Propyl, Isopropyl, Butyl, Isobutyl, 2-Ethylhexyl, Cyclohexyl oder Benzyl, oder sie bilden zusammen - unter Einbezug des Stickstoffatoms - einen Ring, insbesondere einen Pyrrolidin-, Piperidin-, Morpholin- oder N-Alkylpiperazin-Ring, wobei dieser Ring gegebenenfalls substituiert ist.

Bevorzugt steht R¹¹ für einen Methyl-, Ethyl-, Propyl-, Isopropyl-, Butyl-, 2-Ethylhexyl-, Cyclohexyl- oder Benzylrest und R¹² für ein Wasserstoffatom oder einen Methyl-, Ethyl-, Propyl-, Isopropyl-, Butyl-, 2-Ethylhexyl-, Cyclohexyl-, Benzyl-, Methoxy-, Ethoxy-, Propoxy- oder Isopropoxyrest, oder R¹¹ und R¹² bilden zusammen - unter Einbezug des Stickstoffatoms und der Carbonyl- bzw. Thiocarbonylgruppe - einen Ring, insbesondere einen 2-Pyrrolidon-Ring, einen Pyrrolidin-2,5-dion-Ring, einen Piperidin-2-on-Ring, einen Piperidin-2,6-dion-Ring, einen Azepan-2-on-Ring, einen Oxazolidin-2-on-Ring oder einen Thiazolidin-2-on-Ring, wobei ein solcher Ring gegebenenfalls substituiert ist.

Am meisten bevorzugt steht Z¹ für einen Rest der Formel (III a'), 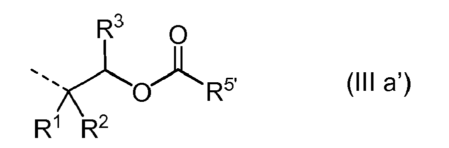 wobei
- R^{5'}: entweder
für einen linearen oder verzweigten Alkylrest mit 6 bis 30, insbesondere 11 bis 30, C-Atomen, gegebenenfalls mit cyclischen Anteilen und gegebenen- falls mit mindestens einem Heteroatom, insbesondere Sauerstoff in der Form von Ether-, Carbonyl- oder Ester-Gruppen, steht,
oder für einen einfach oder mehrfach ungesättigten, linearen oder ver- zweigten Kohlenwasserstoffrest mit 6 bis 30, insbesondere 11 bis 30, C- Atomen, steht;
- und R¹, R² und R³: die bereits genannten Bedeutungen aufweisen.
- R^{5'}: steht am meisten bevorzugt für einen C₁₁-Alkylrest.

Aldimine **BA2,** bei welchen Z für einen Rest Z¹ der Formel (III a') steht, werden im Folgenden Aldimine **BA2'** genannt.

Die Aldimine **BA2'** weisen den Vorteil auf, dass sie geruchsarm oder geruchsfrei sind und dass der daraus freisetzbare Aldehyd ebenfalls geruchsarm oder geruchsfrei ist. Weist der Rest R^{5'} mindestens 11 C-Atome auf, sind die Aldimine geruchsfrei und der daraus freisetzbare Aldehyd ist ebenfalls geruchsfrei.

Ein Aldimin **BA2** der Formel (I) ist erhältlich aus der Kondensationsreaktion von mindestens einem Amin B der Formel (VIII) mit mindestens einem Aldehyd **ALD** der Formel (IX), 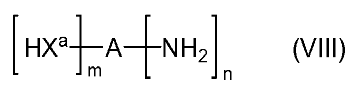 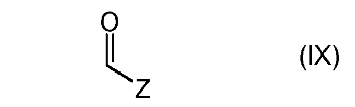 wobei
- X^{a}: für O oder S oder N-R^{6a} oder N-R⁷steht,
wobei R^{6a} entweder für einen einwertigen Kohlenwasserstoffrest mit 1 bis 20 C-Atomen, welcher gegebenenfalls mindestens eine Carbonsäureester-, Nitril-, Nitro-, Phosphonsäureester-, Sulfon- oder Sulfonsäureester-Gruppe aufweist, steht,
oder für einen Substituenten der Formel (II a) steht,

---E-NH₂ (IIa)
und m, n, A, R⁷, E und Z die bereits genannten Bedeutungen aufweisen.

Als Amin **B** der Formel (VIII) geeignet ist in einer Ausführungsform ein Amin **B1** der Formel (VIII a), 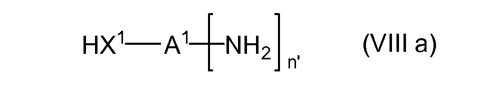 wobei
- n': für 1 oder 2 oder 3 steht,
- A¹: entweder für einen (n'+1)-wertigen Kohlenwasserstoffrest mit 2 bis 30 C- Atomen, welcher gegebenenfalls mindestens ein Heteroatom, insbesondere in der Form von Ether-Sauerstoff oder tertiärem Amin-Stickstoff, enthält, steht,
oder zusammen mit R⁸ für einen (n'+2)-wertigen Kohlenwasserstoffrest mit 3 bis 30 C-Atomen, welcher gegebenenfalls mindestens ein Heteroatom, ins- besondere in der Form von Ether-Sauerstoff oder tertiärem Amin-Stickstoff, enthält, steht; und
- X¹: für O oder S oder N-R^{6a} oder N-R⁸ steht,
wobei R⁸ zusammen mit A¹ für einen (n'+2)-wertigen Kohlenwasser- stoffrest mit 3 bis 30 C-Atomen, welcher gegebenenfalls mindestens ein Heteroatom, insbesondere in Form von Ether-Sauerstoff oder tertiärem Amin-Stickstoff, enthält, steht; und R^{6a} die bereits beschriebene Bedeutung aufweist.

Aus der Kondensation eines Amins **B1** der Formel (VIII a) mit einem Aldehyd **ALD** der Formel (IX) wird ein Aldimin **BA2** der Formel (I) mit m = 1 erhalten. Detaillierte Angaben zu dieser Kondensation sind in WO 2007/036571 A1, insbesondere S.5 bis S.7, angegeben, deren Inhalt hiermit durch Bezugnahme eingeschlossen wird.

Geeignete Amine **B1** sind insbesondere
- Verbindungen mit einer oder zwei primären aliphatischen und einer sekundären Aminogruppe, wie beispielsweise N-Methyl-1,2-ethandiamin, N-Ethyl-1,2-ethandiamin, N-Butyl-1,2-ethandiamin, N-Hexyl-1,2-ethandiamin, N-(2-Ethylhexyl)-1,2-ethandiamin, N-Cyclohexyl-1,2-ethandiamin, 4-Aminomethyl-piperidin, 3-(4-Aminobutyl)-piperidin, N-(2-Aminoethyl)piperazin, Diethylentriamin (DETA), Bis-hexamethylentriamin (BHMT), 3-(2-Aminoethyl)aminopropylamin; Di- und Triamine aus der Cyanoethylierung oder Cyanobutylierung und anschliessender Hydrierung von primären Mono- und Diaminen, beispielsweise N-Methyl-1,3-propandiamin, N-Ethyl-1,3-propandiamin, N-Butyl-1,3-propandiamin, N-Hexyl-1,3-propandiamin, N-(2-Ethylhexyl)-1,3-propandiamin, N-Dodecyl-1,3-propandiamin, N-Cyclohexyl-1,3-propandiamin, 3-Methylamino-1-pentylamin, 3-Ethylamino-1-pentylamin, 3-Butylamino-1-pentylamin, 3-Hexylamino-1-pentylamin, 3-(2-Ethylhexyl)-amino-1-pentylamin, 3-Dodecylamino-1-pentylamin, 3-Cyclohexylamino-1-pentylamin, Dipropylentriamin (DPTA), N3-(3-Aminopentyl)-1,3-pentandiamin, N5-(3-Aminopropyl)-2-methyl-1,5-pentandiamin, N5-(3-Amino-1-ethylpropyl)-2-methyl-1,5-pentandiamin, und Fettdiamine wie N-Cocoalkyl-1,3-propandiamin, N-Oleyl-1,3-propandiamin, N-Soyaalkyl-1,3-propandiamin, N-Talgalkyl-1,3-propandiamin oder N-(C₁₆₋₂₂-Alkyl)-1,3-propandiamin, wie sie beispielsweise unter dem Handelsnamen Duomeen^{®} von Akzo Nobel erhältlich sind; die Produkte aus der Michael-artigen Addition von aliphatischen primären Di- oder Triaminen mit Acrylnitril, Malein- oder Fumarsäurediestern, Citraconsäurediestern, Acryl- und Methacrylsäureestern, Acryl- und Methacrylsäureamiden und Itaconsäurediestern, umgesetzt im Molverhältnis 1:1;
- Hydroxyamine, wie beispielsweise 2-Aminoethanol, 2-Amino-1-propanol, 1-Amino-2-propanol, 3-Amino-1-propanol, 4-Amino-1-butanol, 4-Amino-2-butanol, 2-Amino-2-methylpropanol, 5-Amino-1-pentanol, 6-Amino-1-hexanol, 7-Amino-1-heptanol, 8-Amino-1-octanol, 10-Amino-1-decanol, 12-Amino-1-dodecanol, 4-(2-Aminoethyl)-2-hydroxyethylbenzol, 3-Aminomethyl-3,5,5-trimethyl-cyclohexanol, eine primäre Aminogruppe tragende Derivate von Glykolen wie Diethylenglykol, Dipropylenglykol, Dibutylenglykol und höheren Oligomeren und Polymeren dieser Glykole, beispielsweise 2-(2-Aminoethoxy)-ethanol, 2-(2-(2-Aminoethoxy)ethoxy)ethanol, α-(2-Hydroxymethylethyl)-ω-(2-aminomethylethoxy)-poly(oxy(methyl-1,2-ethandiyl)), eine Hydroxylgruppe und eine primäre Aminogruppen tragende Derivate von polyalkoxylierten drei- oder höherwertigen Alkoholen; Produkte aus der einfachen Cyanoethylierung und anschliessender Hydrierung von Glykolen, beispielsweise 3-(2-Hydroxyethoxy)-propylamin, 3-(2-(2-Hydroxyethoxy)-ethoxy)-propylamin und 3-(6-Hydroxyhexyloxy)-propylamin;
- Mercaptoamine, wie beispielsweise 2-Aminoethanthiol (Cysteamin), 3-Aminopropanthiol, 4-Amino-1-butanthiol, 6-Amino-1-hexanthiol, 8-Amino-1-octanthiol, 10-Amino-1-decanthiol und 12-Amino-1-dodecanthiol.

Als Amin **B1** bevorzugt sind N-Methyl-1,2-ethandiamin, N-Ethyl-1,2-ethandiamin, N-Cyclohexyl-1,2-ethandiamin, N-Methyl-1,3-propandiamin, N-Ethyl-1,3-propandiamin, N-Butyl-1,3-propandiamin, N-Cyclohexyl-1,3-propandiamin, 4-Aminomethyl-piperidin, 3-(4-Aminobutyl)-piperidin, DETA, DPTA, BHMT und Fettdiamine wie N-Cocoalkyl-1,3-propandiamin, N-Oleyl-1,3-propandiamin, N-Soyaalkyl-1,3-propandiamin und N-Talgalkyl-1,3-propandiamin; Produkte aus der Michael-artigen Additionsreaktion von aliphatischen primären Diaminen mit Malein- und Fumarsäurediestern, Acryl- und Methacrylsäureestern, Acryl- und Methacrylsäureamiden, bevorzugt mit Maleinsäurediestern, insbesondere Maleinsäuredimethyl-, -diethyl-, -dipropyl- und -dibutylester, und mit Acrylsäureestern, insbesondere Acrylsäuremethylester, umgesetzt im Molverhältnis 1:1; sowie aliphatische Hydroxy- oder Mercaptoamine, in denen die primäre Aminogruppe von der Hydroxyl- oder Mercaptogruppe durch eine Kette von mindestens 5 Atomen, oder durch einen Ring, getrennt sind, insbesondere 5-Amino-1-pentanol, 6-Amino-1-hexanol und höhere Homologe davon, 4-(2-Aminoethyl)-2-hydroxyethylbenzol, 3-Aminomethyl-3,5,5-trimethyl-cyclohexanol, 2-(2-Aminoethoxy)-ethanol, Triethylenglykol-monoamin und höhere Oligo- und Polymere davon, 3-(2-Hydroxyethoxy)-propylamin, 3-(2-(2-Hydroxyethoxy)-ethoxy)-propylamin und 3-(6-Hydroxyhexyloxy)-propylamin.

Als Amin **B1** besonders bevorzugt sind Amine, welche ausgewählt sind aus der Gruppe bestehend aus N-Methyl-1,2-ethandiamin, N-Ethyl-1,2-ethandiamin, N-Cyclohexyl-1,2-ethandiamin, N-Methyl-1,3-propandiamin, N-Ethyl-1,3-propandiamin, N-Butyl-1,3-propandiamin, N-Cyclohexyl-1,3-propandiamin, 4-Aminomethyl-piperidin, 3-(4-Aminobutyl)-piperidin, DETA, DPTA, BHMT, Fettdiamine, insbesondere N-Cocoalkyl-1,3-propandiamin, N-Oleyl-1,3-propandiamin, N-Soyaalkyl-1,3-propandiamin und N-Talgalkyl-1,3-propandiamin; 5-Amino-1-pentanol, 6-Amino-1-hexanol, 4-(2-Aminoethyl)-2-hydroxyethylbenzol, 3-Aminomethyl-3,5,5-trimethyl-cyclohexanol, 2-(2-Aminoethoxy)-ethanol, Triethylenglykol-monoamin, 3-(2-Hydroxyethoxy)-propylamin, 3-(2-(2-Hydroxyethoxy)-ethoxy)-propylamin und 3-(6-Hydroxyhexyloxy)-propylamin.

Als Amin **B1** am meisten bevorzugt sind Amine, welche ausgewählt sind aus der Gruppe bestehend aus 5-Amino-1-pentanol, 6-Amino-1-hexanol, 4-(2-Aminoethyl)-2-hydroxyethylbenzol, 3-Aminomethyl-3,5,5-trimethyl-cyclohexanol, 2-(2-Aminoethoxy)-ethanol, Triethylenglykol-monoamin, 3-(2-Hydroxyethoxy)-propylamin, 3-(2-(2-Hydroxyethoxy)-ethoxy)-propylamin und 3-(6-Hydroxyhexyloxy)-propylamin.

Als Amin **B** der Formel (VIII) geeignet ist in einer weiteren Ausführungsform ein Amin **B2** der Formel (VIII b), 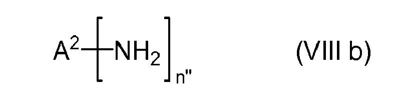 wobei n" für 2 oder 3 oder 4 steht, und
A² für einen n"-wertigen Kohlenwasserstoffrest mit 2 bis 30 C-Atomen, welcher gegebenenfalls mindestens ein Heteroatom, insbesondere in der Form von Ether-Sauerstoff oder tertiärem Amin-Stickstoff, enthält, steht.

Aus der Kondensationsreaktion von einem Amin **B2** der Formel (VIII b) mit einem Aldehyd **ALD** der Formel (IX) wird ein Aldimin **BA2** der Formel (I) mit m = 0 erhalten.
Als Amin **B2** geeignet sind insbesondere
- aliphatische, cycloaliphatische oder arylaliphatische Diamine, beispielsweise Ethylendiamin, 1,2-Propandiamin, 1,3-Propandiamin, 2-Methyl-1,2-propandiamin, 2,2-Dimethyl-1,3-propandiamin, 1,3-Butandiamin, 1,4-Butandiamin, 1,3-Pentandiamin (DAMP), 1,5-Pentandiamin, 1,5-Diamino-2-methylpentan (MPMD), 2-Butyl-2-ethyl-1,5-pentandiamin (C11-Neodiamin), 1,6-Hexandiamin, 2,5-Dimethyl-1,6-hexandiamin, 2,2,4- und 2,4,4-Trimethylhexamethylendiamin (TMD), 1,7-Heptandiamin, 1,8-Octandiamin, 1,9-Nonandiamin, 1,10-Decandiamin, 1,11-Undecandiamin, 1,12-Dodecandiamin, 1,2-, 1,3- und 1,4-Diaminocyclohexan, Bis-(4-aminocyclohexyl)-methan (H₁₂-MDA), Bis-(4-amino-3-methylcyclohexyl)-methan, Bis-(4-amino-3-ethylcyclohexyl)-methan, Bis-(4-amino-3,5-dimethylcyclohexyl)-methan, Bis-(4-amino-3-ethyl-5-methylcyclohexyl)-methan (M-MECA), 1-Amino-3-aminomethyl-3,5,5-trimethylcyclohexan (= Isophorondiamin oder IPDA), 2- und 4-Methyl-1,3-diaminocyclohexan und Mischungen davon, 1,3- und 1,4-Bis-(aminomethyl)-cyclohexan, 2,5(2,6)-Bis-(aminomethyl)-bicyclo[2.2.1]heptan (NBDA), 3(4),8(9)-Bis-(aminomethyl)-tricyclo[5.2.1.0^{2,6}]decan, 1,4-Diamino-2,2,6-trimethylcyclohexan (TMCDA), 1,8-Menthandiamin, 3,9-Bis-(3-aminopropyl)-2,4,8,10-tetraoxaspiro[5.5]undecan sowie 1,3- und 1,4-Xylylendiamin;
- Ethergruppen-haltige aliphatische Diamine, beispielsweise Bis-(2-aminoethyl)ether, 3,6-Dioxaoctan-1,8-diamin, 4,7-Dioxadecan-1,10-diamin, 4,7-Dioxadecan-2,9-diamin, 4,9-Dioxadodecan-1,12-diamin, 5,8-Dioxadodecan-3,10-diamin, Bis-(3-aminopropyl)polytetrahydrofurane und andere Polytetrahydrofuran-diamine mit Molekulargewichten bis 550 g/mol, sowie Polyoxyalkylen-Diamine mit einem Molekulargewicht bis 600 g/mol. Letztere stellen typischerweise Produkte aus der Aminierung von Polyoxyalkylen-Diolen dar und sind beispielsweise erhältlich unter dem Namen Jeffamine^{®} (von Huntsman), unter dem Namen Polyetheramin (von BASF) oder unter dem Namen PC Amine^{®} (von Nitroil). Insbesondere geeignete Polyoxyalkylen-Diamine sind Jeffamine^{®} D-230, Jeffamine^{®} D-400, Jeffamine^{®} ED-600, Jeffamine^{®} XTJ-568, Jeffamine^{®} XTJ-569, Jeffamine^{®} EDR-104, Jeffamine^{®} EDR-148, Jeffamine^{®} EDR-176; Polyetheramin D 230 und Polyetheramin D 400, PC Amine^{®} DA 250 und PC Amine^{®} DA 400;
- aliphatische, cycloaliphatische oder arylaliphatische Triamine wie 4-Aminomethyl-1,8-octandiamin, 1,3,5-Tris-(aminomethyl)-benzol, 1,3,5-Tris-(aminomethyl)-cyclohexan, Tris-(2-aminoethyl)-amin, Tris-(2-aminopropyl)-amin, Tris-(3-aminopropyl)-amin;
- Polyoxyalkylen-Triamine mit einem Molekulargewicht bis 600 g/mol, welche typischerweise Produkte aus der Aminierung von Polyoxyalkylen-Triolen darstellen und beispielsweise erhältlich sind unter dem Handelsnamen Jeffamine^{®} (von Huntsman), unter dem Namen Polyetheramin (von BASF) oder unter dem Namen PC Amine^{®} (von Nitroil), wie zum Beispiel Jeffamine^{®} T-403,; Polyetheramin T403 und PC Amine^{®} TA 403;
- aromatische Di- und Triamine, wie beispielsweise 1,2-, 1,3- und 1,4-Phenylendiamin, 2,4- und 2,6-Toluylendiamin (TDA), 3,4-Toluylendiamin, 3,5-Dimethylthio-2,4- und -2,6-toluylendiamin, 3,5-Diethyl-2,4- und -2,6-toluylendiamin (DETDA), 2,4,6-Triethyl-1,3-phenylendiamin, 2,4,6-Triisopropyl-1,3-phenylendiamin, 3-Ethyl-5-methyl-2,4-toluylendiamin, 3,5-Diisopropyl-2,4-toluylendiamin, 3,5-Bis-(1-methylpropyl)-2,4-toluylendiamin, 3,5-Bis-(tert.butyl)-2,4-toluylendiamin, 3-Ethyl-5-isopropyl-2,4-toluylendiamin, 5-Isopropyl-2,4-toluylendiamin, 5-(tert.Butyl)-2,4-toluylendiamin, 4,6-Bis-(1-methylpropyl)-1,3-phenylendiamin, 4-Isopropyl-6-(tert.butyl)-1,3-phenylendiamin, 4-Ethyl-6-isopropyl-1,3-phenylendiamin, 4-Ethyl-6-(2-methylpropyl)-1,3-phenylendiamin, 4-Ethyl-6-(1-methylpropyl)-1,3-phenylendiamin, 4-Ethyl-6-(2-methylpropyl)-1,3-phenylendiamin, 4-Isopropyl-6-(1-methylpropyl)-1,3-phenylendiamin, 4-(tert.Butyl)-6-(2-methylpropyl)-1,3-phenylendiamin, 4-Cyclopentyl-6-ethyl-1,3-phenylendiamin, 4-Cyclopentyl-6-isopropyl-1,3-phenylendiamin, 4,6-Dicyclopentyl-1,3-phenylendiamin, 3-Isopropyl-2,6-toluylendiamin, 2-Methylpropyl-(4-chloro-3,5-diaminobenzoat), tert.Butyl-(4-chloro-3,5-diaminobenzoat), 2,6-Diaminopyridin, Melamin, 4,4'-, 2,4'- und 2,2'-Diaminodiphenylmethan (MDA), 3,3'-Dimethyl-4,4'-diaminodiphenylmethan, 3,3'-Dichloro-4,4'-diaminodiphenylmethan (MOCA), 3,3',5,5'-Tetraethyl-4,4'-diaminodiphenylmethan (M-DEA), 3,3',5,5'-Tetraethyl-2,2'-dichloro-4,4'-diaminodiphenylmethan (M-CDEA), 3,3'-Diisopropyl-5,5'-dimethyl-4,4'-diaminodiphenylmethan (M-MIPA), 3,3',5,5'-Tetraisopropyl-4,4'-diaminodiphenylmethan (M-DIPA), 3,3',5,5'-Tetra-(1-methylpropyl)-4,4'-diaminodiphenylmethan, 3,3'-Dimethyl-5,5'-di-tert.butyl-4,4'-diaminodiphenylmethan, 3,3'-Di-tert.butyl-4,4'-diaminodiphenylmethan, 4,4'-Diaminodiphenylsulfon (DDS), 4-Amino-N-(4-aminophenyl)-benzolsulfonamid, 5,5'-Methylendianthranilsäure, Dimethyl-(5,5'-Methylendianthranilat), 1,3-Propylen-bis-(4-aminobenzoat), 1,4-Butylen-bis-(4-aminobenzoat), Polytetramethylenoxid-bis-(4-aminobenzoat) (erhältlich als Versalink^{®} von Air Products) und 1,2-Bis-(2-aminophenylthio)-ethan.
- Polyamine mit primären aromatischen und primären aliphatischen Aminogruppen, insbesondere 4-Aminoethylanilin, 4-Aminomethylanilin, 4-[(4-Aminocyclohexyl)methyl]anilin, 2-Aminoethylanilin, 2-Aminomethylanilin, 2-[(4-Aminocyclohexyl)methyl]anilin und 4-[(2-Aminocyclohexyl)methyl]anilin.

Bevorzugt ist das Amin **B2** ausgewählt aus der Gruppe bestehend aus 1,6-Hexamethylendiamin, MPMD, DAMP, IPDA, TMD, 1,3-Xylylendiamin, 1,3-Bis-(aminomethyl)cyclohexan, Bis-(4-aminocyclohexyl)-methan, Bis-(4-amino-3-methylcyclohexyl)-methan, 3(4),8(9)-Bis-(aminomethyl)-tricyclo[5.2.1.0^{2,6}]decan, 1,2-, 1,3- und 1,4-Diaminocyclohexan, 1,4-Diamino-2,2,6-trimethylcyclohexan, 3,6-Dioxaoctan-1,8-diamin, 4,7-Dioxadecan-1,10-diamin, 4-Aminomethyl-1,8-octandiamin, Polyoxyalkylen-Polyaminen mit zwei oder drei Aminogruppen und einem Molekulargewicht bis 600 g/mol, insbesondere die unter dem Handelsnamen Jeffamine^{®} erhältlichen Typen D-230, D-400 und T-403 von Huntsman und dazu analoge Verbindungen von BASF oder Nitroil; 1,3- und 1,4-Phenylendiamin, 2,4- und 2,6-Toluylendiamin, 4,4'-, 2,4'- und 2,2'-Diaminodiphenylmethan, 3,3'-Dichlor-4,4'-diaminodiphenylmethan und Mischungen der genannten Polyamine.

Zusammen mit Aminen **B2** können auch Polyamine mit mehr als 30 C-Atomen bei der Herstellung von Aldiminen mitverwendet werden. Dazu geeignete Polyamine sind insbesondere Polyoxyalkylen-Di- und Triamine mit Molekulargewichten über 600 g/mol, insbesondere Jeffamine^{®} D-2000, Jeffamine^{®} D-4000, Jeffamine^{®} XTJ-511, Jeffamine^{®} ED-900, Jeffamine^{®} ED-2003, Jeffamine^{®} XTJ-523, Jeffamine^{®} XTJ-536, Jeffamine^{®} XTJ-542, Jeffamine^{®} XTJ-559, Jeffamine^{®} T-3000 und Jeffamine^{®} T-5000.

Die Aldehyde **ALD** der Formel (IX) sind nicht enolisierbar. Aldimine mit Aldiminogruppen ausgehend von einem nicht enolisierbaren Aldehyd können keine Enaminogruppen bilden und stellen deshalb besonders gut blockierte Amine dar.

In einer bevorzugten Ausführungsform weist der Aldehyd **ALD** einen Rest Z¹ der Formel (III a) auf. Solche Aldehyde stellen Ester von aliphatischen, cycloaliphatischen oder arylaliphatischen 2,2-disubstituierten 3-Hydroxyaldehyden, wie beispielsweise 2,2-Dimethyl-3-hydroxypropanal, 2-Hydroxymethyl-2-methyl-butanal, 2-Hydroxymethyl-2-ethyl-butanal, 2-Hydroxymethyl-2-methylpentanal, 2-Hydroxymethyl-2-ethyl-hexanal, 1-Hydroxymethyl-cyclopentancarboxaldehyd, 1-Hydroxymethyl-cyclohexancarboxaldehyd 1-Hydroxymethyl-cyclohex-3-encarboxaldehyd, 2-Hydroxymethyl-2-methyl-3-phenyl-propanal, 3-Hydroxy-2-methyl-2-phenyl-propanal und 3-Hydroxy-2,2-diphenyl-propanal, mit geeigneten Carbonsäuren dar, wobei als Carbonsäuren die beispielsweise die Folgenden geeignet sind: gesättigte aliphatische Carbonsäuren, wie Ameisensäure, Essigsäure, Propionsäure, Buttersäure, Isobuttersäure, Valeriansäure, Capronsäure, 2-Ethylcapronsäure, Oenanthsäure, Caprylsäure, Pelargonsäure, Caprinsäure, Undecansäure, Laurinsäure, Tridecansäure, Myristinsäure, Pentadecansäure, Palmitinsäure, Margarinsäure, Stearinsäure, Nonadecansäure, Arachinsäure; einfach ungesättigte aliphatische Carbonsäuren wie Palmitoleinsäure, Ölsäure, Erucasäure; mehrfach ungesättigte aliphatische Carbonsäuren wie Linolsäure, Linolensäure, Elaeostearinsäure, Arachidonsäure; cycloaliphatische Carbonsäuren wie Cyclohexancarbonsäure, arylaliphatische Carbonsäuren wie Phenylessigsäure; aromatische Carbonsäuren wie Benzoesäure, Naphthoesäure, Toluylsäure, Anissäure; Isomere dieser Säuren; Fettsäuregemische aus der technischen Verseifung von natürlichen Ölen und Fetten wie beispielsweise Rapsöl, Sonnenblumenöl, Leinöl, Ölbaumöl, Kokosnussöl, Ölpalmkernöl und Ölpalmöl; sowie Dicarbonsäuremonoalkyl- und -arylester, wie sie aus der einfachen Veresterung von Dicarbonsäuren wie Bernsteinsäure, Glutarsäure, Adipinsäure, Pimelinsäure, Korksäure, Azelainsäure, Sebacinsäure, 1,12-Dodecandisäure, Maleinsäure, Fumarsäure, Hexahydrophthalsäure, Hexahydroisophthalsäure, Hexahydroterephthalsäure, 3,6,9-Trioxaundecandisäure und ähnliche Derivate von Polyethylenglykol, mit Alkoholen wie Methanol, Ethanol, Propanol, Butanol, höheren Homologen und Isomeren dieser Alkohole erhalten werden. Bevorzugt sind Carbonsäuren mit mindestens 7 C-Atomen, insbesondere solche mit 12 bis 31 C-Atomen, insbesondere Laurinsäure, Myristinsäure, Palmitinsäure, Stearinsäure und Ölsäure. Besonders bevorzugt ist Laurinsäure.

In einer weiteren bevorzugten Ausführungsform weist der Aldehyd **ALD** einen Rest Z¹ der Formel (III b) auf. Solche Aldehyde stellen Ether von aliphatischen, cycloaliphatischen oder arylaliphatischen 2,2-disubstituierten 3-Hydroxyaldehyden mit Alkoholen oder Phenolen der Formel R⁴-OH dar. Bevorzugte Aldehyde **ALD** in Form solcher Ether sind 2,2-Dimethyl-3-phenoxypropanal, 3-Cyclohexyloxy-2,2-dimethyl-propanal, 2,2-Dimethyl-3-(2-ethylhexyloxy)-propanal, 2,2-Dimethyl-3-lauroxy-propanal und 2,2-Dimethyl-3-stearoxy-propanal.

In einer weiteren bevorzugten Ausführungsform weist der Aldehyd **ALD** einen Rest Z¹ der Formel (III c) auf. Solche Aldehyde sind insbesondere erhältlich als Produkt einer Mannich-Reaktion oder einer der Mannich-Reaktion analogen α-Aminoalkylierung, wie sie aus der Fachliteratur bekannt sind; ein solcher Aldehyd kann deshalb auch als Mannich-Base bezeichnet werden. Dabei werden ein sekundärer Aldehyd, insbesondere Isobutyraldehyd, ein weiterer Aldehyd, insbesondere Formaldehyd, und ein sekundäres aliphatisches Amin unter Wasserabspaltung zu einem Aldehyd **ALD** umgesetzt. Besonders geeignete Aldehyde **ALD** in Form einer solchen Mannich-Base sind 2,2-Dimethyl-3-(N-morpholino)-propanal, 2,2-Dimethyl-3-(N-(2,6-dimethyl)morpholino)-propanal, 2,2-Dimethyl-3-(N-benzylmethylamino)-propanal, 2,2-Dimethyl-3-(N-benzylisopropylamino)-propanal und 2,2-Dimethyl-3-(N-cyclohexylmethylamino)-propanal.

In einer weiteren bevorzugten Ausführungsform weist der Aldehyd **ALD** einen Rest Z¹ der Formel (III d) auf. Solche Aldehyde sind insbesondere als Produkt einer Mannich-Reaktion erhältlich - auf dieselbe Weise wie die Aldehyde **ALD** mit einem Rest Z¹ der Formel (111 c) - wobei aber anstelle eines sekundären aliphatischen Amins ein Amid, Lactam, Carbamat oder Imid eingesetzt wird. Besonders geeignete Aldehyde **ALD** mit einem Rest Z¹ der Formel (III d) sind N-(2,2-Dimethyl-3-oxopropyl)-N-methylacetamid, N-(2,2-Dimethyl-3-oxopropyl)-N-butylacetamid, N-(2,2-Dimethyl-3-oxopropyl)-N-(2-ethylhexyl)acetamid, N-(2,2-Dimethyl-3-oxopropyl)-N-benzylacetamid, N-(2,2-Dimethyl-3-oxopropyl)-N-methylbutyramid, N-(2,2-Dimethyl-3-oxopropyl)-N-methyl-(2-ethylcapronamid), N-(2,2-Dimethyl-3-oxopropyl)-N-methylbenzamid, O-Ethyl-N-(2,2-dimethyl-3-oxopropyl)-N-methylcarbamat, N-(2,2-Dimethyl-3-oxopropyl)-pyrrolidin-2-on, N-(2,2-Dimethyl-3-oxopropyl)-piperidin-2-on, N-(2,2-Dimethyl-3-oxopropyl)-azepan-2-on, N-(2,2-Dimethyl-3-oxopropyl)-oxazolidin-2-on, N-(2,2-Dimethyl-3-oxopropyl)-pyrrolidin-2,5-dion und N-(2,2-Dimethyl-3-oxopropyl)-phthalimid.

In einer weiteren bevorzugten Ausführungsform weist der Aldehyd **ALD** einen Rest Z² auf. Solche Aldehyde **ALD** sind beispielsweise aromatische Aldehyde, wie Benzaldehyd, 2- und 3- und 4-Tolualdehyd, 4-Ethyl- und 4-Propyl- und 4-Isopropyl und 4-Butyl-benzaldehyd, 2,4-Dimethylbenzaldehyd, 2,4,5-Trimethylbenzaldehyd, 4-Acetoxybenzaldehyd, 4-Anisaldehyd, 4-Ethoxybenzaldehyd, die isomeren Di- und Trialkoxybenzaldehyde, 2-, 3- und 4-Nitrobenzaldehyd, 2- und 3- und 4-Formylpyridin, 2-Furfuraldehyd, 2-Thiophencarbaldehyd, 1- und 2-Naphthylaldehyd, 3- und 4-Phenyloxy-benzaldehyd, Chinolin-2-carbaldehyd und dessen 3-, 4-, 5-, 6-, 7- und 8-Stellungsisomere, sowie Anthracen-9-carbaldehyd; sowie weiterhin Glyoxal, Glyoxalsäureester wie zum Beispiel Glyoxalsäuremethylester, Zimtaldehyd und substituierte Zimtaldehyde.

Als Aldehyd **ALD** der Formel (IX) bevorzugt sind 2,2-Dimethyl-3-lauroyloxy-propanal, 2,2-Dimethyl-3-myristoyloxy-propanal, 2,2-Dimethyl-3-palmitoyloxy-propanal, 2,2-Dimethyl-3-stearoyloxy-propanal und 2,2-Dimethyl-3-oleyloxy-propanal.

Als Aldehyd **ALD** der Formel (IX) am meisten bevorzugt ist 2,2-Dimethyl-3-lauroyloxy-propanal.

Das blockierte Amin **BA** ist in der härtbaren Zusammensetzung vorteilhaft in einer derartigen Menge vorhanden, dass das Verhältnis der Anzahl der blockierten Aminogruppen und gegebenenfalls vorhandenen Hydroxyl-, Mercapto- und sekundären und primären Aminogruppen zur Anzahl der Isocyanatgruppen 0.6 bis 1.1, bevorzugt 0.7 bis 1.0, insbesondere 0.8 bis 1.0, beträgt. Falls blockierte Aminogruppen in Form von Oxazolidinogruppen vorhanden sind, werden diese doppelt gezählt, da diese nach erfolgter Hydrolyse gegenüber Isocyanatgruppen formal difunktionell sind.

Die härtbare Zusammensetzung umfasst neben mindestens einem Polymer **P** und mindestens einem blockierten Amin **BA** weiterhin mindestens eine feinteilige, bei Raumtemperatur feste, bei Erwärmung auf eine Mindesttemperatur von 50 °C bis 100 °C Wasser erzeugende Substanz **W.**

Die Substanz **W** enthält bei Raumtemperatur formal kein Wasser, auch kein koordinativ - beispielsweise als Ligand oder als Kristallwasser - oder adsorptiv - beispielsweise in Hohlräumen von Zeolithen, in Gelen oder an ionische Polymere - gebundenes Wasser. Bei Erwärmung auf eine Mindesttemperatur von 50 °C bis 100 °C, bevorzugt 60°C bis 100 °C, insbesondere 70 °C bis 100 °C, erzeugt die Substanz **W** Wasser, das aus der Substanz **W** durch einen chemischen Prozess gebildet wird, beispielsweise durch Bildung eines Anhydrids aus einer Säure. Bei Raumtemperatur ist die Substanz **W** fest und feinteilig. Sie weist insbesondere einen mittleren Teilchendurchmesser von 0.01 bis 100 µm, bevorzugt 0.1 bis 50 µm, besonders bevorzugt 0.3 bis 30 µm, auf. Die Substanz **W** lässt sich in eine flüssige bis pastöse Masse makroskopisch gesehen homogen einmischen.

Die Substanz **W** ist in der härtbaren Zusammensetzung vorteilhaft in einer derartigen Menge vorhanden, dass das Verhältnis der Anzahl blockierte Aminogruppen des blockierten Amins **BA** zur Anzahl Wassermoleküle, welche bis zu einer maximalen Temperatur von 160 °C, bevorzugt 140 °C, besonders bevorzugt 130 °C, aus der Substanz **W** insgesamt gebildet werden können, 0.5 bis 2.0, bevorzugt 0.75 bis 1.5, insbesondere 0.8 bis 1.2, beträgt.

Als Substanz **W** geeignet ist insbesondere Borsäure ( B(OH)₃ ). Freie Borsäure hat die Eigenschaft, beim Erwärmung auf eine Temperatur von ca. 100 °C pro Mol Borsäure ein Mol Wasser zu erzeugen, wobei sich, wie im nachfolgenden Schema dargestellt, Metaborsäure (HBO₂) bildet.

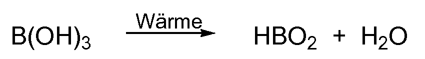

Als Substanz **W** weiterhin geeignet sind Aluminiumhydroxide und Kieselsäuren.

Wird die Substanz **W** bei Raumtemperatur unter Ausschluss von Feuchtigkeit mit dem Isocyanatgruppen aufweisenden Polymer **P** vermischt und aufbewahrt, so ist eine solche Mischung während mehreren Wochen bis einigen Monaten lagerstabil; das heisst, sie verändert sich in ihren Anwendungs- oder Gebrauchseigenschaften durch die Lagerung nicht oder nur unwesentlich.

Die Substanz **W** kann, falls gewünscht, in verkapselter Form vorliegen. Geeigneterweise wird dazu eine Verkapselung gewählt, bei welcher mittels Erwärmung auf eine Mindesttemperatur von 50 °C bis 100 °C die Substanz **W** soweit freigesetzt wird, dass das aus der Substanz **W** gebildete Wasser in der Zusammensetzung verfügbar ist. Eine Verkapselung der Substanz **W** kann vorteilhaft sein, wenn die Substanz **W** über einen sehr langen Zeitraum, beispielsweise während bis zu einem Jahr oder länger, zusammen mit dem Isocyanatgruppen aufweisenden Polymer **P** gelagert werden soll. Als Methode zur Verkapselung der Substanz **W** geeignet ist beispielsweise das Verkapseln mittels eines kristallisierenden oder thermoplastischen Polymers, welches bei Raumtemperatur fest ist und bei Erwärmung auf eine Mindesttemperatur von 50 °C bis 100 °C schmilzt beziehungsweise flüssig wird. Das Polymer kann zum Herstellen der verkapselten Substanz **W** beispielsweise in einem geeigneten Lösemittel gelöst, mit der Substanz **W** vermischt und diese Mischung anschliessend sprühgetrocknet werden.

Die Substanz **W** wird bevorzugt als Bestandteil einer Paste eingesetzt, wobei diese Paste mindestens ein bei Raumtemperatur flüssiges Medium umfasst. Als flüssiges Medium geeignet sind insbesondere Weichmacher, insbesondere Carbonsäureester wie Phthalate, insbesondere Dioctylphthalat, Diisononylphthalat oder Diisodecylphthalat, Adipate, insbesondere Dioctyladipat, Azelate und Sebacate, organische Phosphor- und Sulfonsäureester oder Polybutene. Als flüssiges Medium weiterhin geeignet sind Polyole, wie sie vorgängig zur Herstellung eines Polyurethanpolymers PUP erwähnt wurden, sowie sogenannte gecappte Polyole, also Polyole, deren Hydroxylgruppen umgesetzt wurden, beispielsweise zu Ester- oder insbesondere zu Ethergruppen. Weiterhin als flüssiges Medium geeignet sind Polyurethanpolymere, deren Isocyanatgruppen mit beispielsweise monofunktionellen Alkoholen, Thiolen oder primären oder sekundären Aminen umgesetzt sind, weiterhin Polymere mit Aldiminogruppen, die abgeleitet sind von Aldehyden **ALD** der Formel (IX), insbesondere solche, bei welchen der Rest Z für einen Rest Z¹ der Formel (III a') steht, sowie weiterhin Polymere, welche weitgehend frei sind von Isocyanatgruppen oder gegenüber Isocyanatgruppen reaktiven Gruppen.

Die härtbare Zusammensetzung kann neben mindestens einem Polymer **P,** mindestens einem blockierten Amin **BA** und mindestens einer Wasser erzeugenden Substanz **W** weitere Substanzen enthalten.

Insbesondere kann sie ein Material enthalten, welches die Wärmeleitfähigkeit der Zusammensetzung erhöht und/oder es aufgrund seiner piezoelektrischen, ferromagnetischen oder superparamagnetischen Eigenschaften erlaubt, die Zusammensetzung durch Anlegen von magnetischen und/oder elektrischen Wechselfeldern, insbesondere Mikrowellen oder Induktion, zu erwärmen. Dies erlaubt es, die Zusammensetzung, welche im allgemeinen eine eingeschränkte Wärmeleitfähigkeit aufweist, schneller zu erwärmen und damit beschleunigt auszuhärten. Als derartiges Material geeignet sind insbesondere Graphit, leitfähige Russe und Metallpulver; Piezoelektrika wie Quarz, Turmalin, Bariumtitanat, Lithiumsulfat, Kalium(Natrium)tartrat, Ethylendiamintartrat und Blei-Zirkonium-Titanat; Ferromagnetika oder Superparamagnetika wie die Metalle Aluminium, Kobalt, Eisen, Nickel und deren Legierungen, Metalloxide vom Typ n-Maghemit (γ-Fe₂O₃), n-Magnetit (Fe₃O₄), sowie Ferrite der allgemeinen Formel MFe₂O₄, wobei M für zweiwertige Metalle aus der Gruppe Kupfer, Zink, Kobalt, Nickel, Magnesium, Calcium oder Cadmium steht. Bevorzugt liegt dieses Material feinteilig vor, wobei der mittlere Teilchendurchmesser unter 120 µm, insbesondere unter 50 µm, liegt. Für die Ausnutzung des superparamagnetischen Effekts liegt der mittlere Teilchendurchmesser bevorzugt unter 50 nm, insbesondere unter 30 nm.

Weiterhin kann die härtbare Zusammensetzung insbesondere die in Polyurethanzusammensetzungen üblicherweise eingesetzten Hilfs- und Zusatzstoffe enthalten, beispielsweise die Folgenden:
- Weichmacher, insbesondere Carbonsäureester wie Phthalate, insbesondere Dioctylphthalat, Diisononylphthalat oder Diisodecylphthalat, Adipate, insbesondere Dioctyladipat, Azelate und Sebacate, organische Phosphor- und Sulfonsäureester oder Polybutene;
- nicht-reaktive thermoplastische Polymere, wie beispielsweise Homo- oder Copolymere von ungesättigten Monomeren, insbesondere aus der Gruppe umfassend Ethylen, Propylen, Butylen, Isobutylen, Isopren, Vinylacetat und Alkyl(meth)acrylate, insbesondere Polyethylene (PE), Polypropylene (PP), Polyisobutylene, Ethylenvinylacetat-Copolymere (EVA) und ataktische Poly-α-Olefine (APAO);
- Lösemittel;
- anorganische und organische Füllstoffe, insbesondere gemahlene oder gefällte Calciumcarbonate, welche gegebenenfalls mit Fettsäuren, insbesondere Stearaten, beschichtet sind, Baryt (BaSO₄, auch Schwerspat genannt), Quarzmehle, calcinierte Kaoline, Aluminiumoxide, Aluminiumhydroxide, Kieselsäuren, insbesondere hochdisperse Kieselsäuren aus Pyrolyseprozessen, Russe, insbesondere industriell hergestellte Russe (im Folgenden als "Russ" bezeichnet), PVC-Pulver oder Hohlkugeln,
- Fasern, beispielsweise aus Polyethylen;
- Pigmente, beispielsweise Titandioxid oder Eisenoxide;
- Katalysatoren, welche die Hydrolyse der Aldiminogruppen beschleunigen, insbesondere Säuren, insbesondere organische Carbonsäuren wie Benzoesäure, Salicylsäure oder 2-Nitrobenzoesäure, organische Carbonsäureanhydride wie Phthalsäureanhydrid, Hexahydrophthalsäureanhydrid und Hexahydromethylphthalsäureanhydrid, Silylester von organischen Carbonsäuren, organische Sulfonsäuren wie Methansulfonsäure, p-Toluolsulfonsäure oder 4-Dodecylbenzolsulfonsäure, Sulfonsäureester, andere organische oder anorganische Säuren, oder Mischungen der vorgenannten Säuren und Säureester;
- Katalysatoren, welche die Reaktion der Isocyanatgruppen beschleunigen, insbesondere Organozinnverbindungen wie Dibutylzinndiacetat, Dibutylzinndilaurat, Dibutylzinndichlorid, Dibutylzinndiacetylacetonat und Dioctylzinndilaurat, Bismutverbindungen wie Bismuttrioctoat und Bismuttris(neodecanoat), und tertiäre Aminogruppen enthaltende Verbindungen wie 2,2'-Dimorpholinodiethylether und 1,4-Diazabicyclo[2.2.2]octan;
- Rheologie-Modifizierer, insbesondere Verdickungsmittel oder Thixotropiermittel, zum Beispiel Harnstoffverbindungen, Polyamidwachse, Bentonite oder pyrogene Kieselsäuren;
- Trocknungsmittel, wie beispielsweise Molekularsiebe, Calciumoxid, hochreaktive Isocyanate wie p-Tosylisocyanat, monomere Diisocyanate, Orthoameisensäureester, Alkoxysilane wie Tetraethoxysilan, Organoalkoxysilane wie Vinyltrimethoxysilan, und Organoalkoxysilane, welche in α-Stellung zur Silangruppe eine funktionelle Gruppe aufweisen;
- Haftvermittler, insbesondere Organoalkoxysilane ("Silane") wie beispielsweise Epoxysilane, Vinylsilane, (Meth)acrylsilane, Isocyanatosilane, Carbamatosilane, Alkylsilane, S-(Alkylcarbonyl)-mercaptosilane und Aldiminosilane, sowie oligomere Formen dieser Silane;
- Stabilisatoren gegen Wärme, Licht- und UV-Strahlung;
- flammhemmende Substanzen;
- oberflächenaktive Substanzen, insbesondere Netzmittel, Verlaufsmittel, Entlüftungsmittel oder Entschäumer;
- Biozide wie beispielsweise Algizide, Fungizide oder das Pilzwachstum hemmende Substanzen.

Es ist vorteilhaft, beim Einsatz der weiteren Bestandteile der Zusammensetzung darauf zu achten, dass diese die Lagerstabilität der Zusammensetzung nicht stark beeinträchtigen. Falls solche Substanzen zusammen mit dem Polymer **P** gelagert werden sollen, bedeutet dies insbesondere, dass sie kein oder höchstens Spuren von Wasser enthalten sollten. Es kann sinnvoll sein, gewisse Bestandteile vor dem Einmischen in die Zusammensetzung chemisch oder physikalisch zu trocknen.

Bevorzugt enthält die härtbare Zusammensetzung mindestens einen Katalysator. Der Katalysator ist insbesondere eine der genannten Säuren, wie Benzoesäure oder Salicylsäure.

Bevorzugt enthält die härtbare Zusammensetzung weiterhin mindestens einen Füllstoff.

In einer besonders bevorzugten Ausführungsform stellt die härtbare Zusammensetzung eine einkomponentige Zusammensetzung **EZ** dar. Insbesondere ist die einkomponentige Zusammensetzung **EZ** eine Zusammensetzung umfassend:
a) mindestens ein Isocyanatgruppen aufweisendes Polymer **P,**
b') entweder mindestens ein Oxazolidin **BA1** oder mindestens ein Aldimin **BA2** der Formel (I),
c) mindestens eine feinteilige, bei Raumtemperatur feste, bei Erwärmung auf eine Mindesttemperatur im Bereich von 50 °C bis 100 °C Wasser erzeugende Substanz **W.**

Als "einkomponentig" wird im vorliegenden Dokument eine härtbare Zusammensetzung bezeichnet, bei welcher alle Bestandteile der Zusammensetzung vermischt im gleichen Gebinde gelagert werden, und welche bei Raumtemperatur über einen Zeitraum von mehreren Wochen bis Monaten lagerstabil ist, sich also in ihren Anwendungs- oder Gebrauchseigenschaften durch die Lagerung nicht oder nur unwesentlich verändert, und welche mit Feuchtigkeit härtbar ist.

As Bestandteil der einkomponentigen Zusammensetzung **EZ** bevorzugt sind Aldimine **BA2** der Formel (I). Besonders bevorzugt sind Aldimine **BA2** mit einem Rest Z¹ der Formel (III a) oder (III b) oder (III d) und Aldimine **BA2** mit einem Rest Z². Insbesondere bevorzugt sind Aldimine **BA2** mit einem Rest Z¹ der Formel (III a). Am meisten bevorzugt sind die Aldimine **BA2',** welche, wie bereits erwähnt, einen Rest Z¹ der Formel (III a') aufweisen und geruchsarm oder geruchsfrei sind.

Falls die einkomponentige Zusammensetzung **EZ** ein Aldimin **BA2** mit einem Rest Z¹ der Formel (III c) enthält, weist das Polymer **P** bevorzugt aliphatische Isocyanatgruppen auf.

Die einkomponentige Zusammensetzung **EZ** wird unter Ausschluss von Feuchtigkeit hergestellt und aufbewahrt. Sie ist bei Raumtemperatur lagerstabil, d.h. sie kann unter Ausschluss von Feuchtigkeit in einer geeigneten Verpackung oder Anordnung, wie beispielsweise einem Fass, einem Eimer, einem Beutel, einer Kartusche oder einer Flasche über einen längeren Zeitraum aufbewahrt werden, ohne dass sie sich in ihren Anwendungseigenschaften oder in ihren Eigenschaften nach der Aushärtung in einem für ihren Gebrauch relevanten Ausmass verändert. Üblicherweise wird die Lagerstabilität über die Messung der Viskosität oder der Auspresskraft ermittelt.

Die Lagerstabilität der einkomponentigen Zusammensetzung **EZ** kann insbesondere dann sehr lang sein, beispielsweise bis zu einem Jahr oder länger, wenn die Substanz **W** in verkapselter Form vorliegt, wie vorgängig beschrieben.

In einer weiteren bevorzugten Ausführungsform stellt die härtbare Zusammensetzung eine zweikomponentige Zusammensetzung **ZZ** dar, bestehend aus einer ersten Komponente **K1** und einer zweiten Komponente **K2,** wobei die erste Komponente **K1** mindestens das Isocyanatgruppen aufweisende Polymer **P** und die zweite Komponente **K2** mindestens die Wasser erzeugende Substanz **W** enthält.

Insbesondere besteht die zweikomponentige Zusammensetzung **ZZ** aus einer ersten Komponente **K1** enthaltend
a) mindestens ein Isocyanatgruppen aufweisendes Polymer **P,** und
b') gegebenenfalls mindestens ein Oxazolidin **BA1** oder mindestens ein Aldimin **BA2** der Formel (I),
und einer zweiten Komponente **K2** enthaltend
b") gegebenenfalls mindestens ein blockiertes Amin **BA,** welches mindestens eine blockierte, hydrolytisch aktivierbare Aminogruppe und entweder mindestens eine weitere blockierte, hydrolytisch aktivierbare Aminogruppe oder mindestens eine Reaktivgruppe **R** aufweist, und
c) mindestens eine feinteilige, bei Raumtemperatur feste, bei Erwärmung auf eine Mindesttemperatur im Bereich von 50 °C bis 100 °C Wasser erzeugende Substanz **W,**
mit der Massgabe, dass die zweikomponentige Zusammensetzung **ZZ** mindestens ein blockiertes Amin **BA** enthält.

Als "zweikomponentig" wird im vorliegenden Dokument eine Zusammensetzung bezeichnet, bei welcher die Bestandteile der Zusammensetzung in zwei verschiedenen Komponenten vorliegen, welche in voneinander getrennten Gebinden gelagert werden und welche jeweils für sich bei Raumtemperatur lagerstabil sind. Erst kurz vor oder während der Applikation der Zusammensetzung werden die beiden Komponenten miteinander vermischt, worauf die vermischte Zusammensetzung aushärtet, wobei die Aushärtung erst durch die Einwirkung von Feuchtigkeit abläuft oder vervollständigt wird.

In einer bevorzugten Ausführungsform enthält die Komponente **K1** mindestens ein blockiertes Amin **BA** in Form eines Oxazolidins **BA1** oder eines Aldimins **BA2** der Formel (I).

Als Bestandteil der Komponente **K1** bevorzugt sind Aldimine **BA2** der Formel (I). Besonders bevorzugt sind Aldimine **BA2** mit einem Rest Z¹ der Formel (III a) oder (III b) oder (III d) und Aldimine **BA2** mit einem Rest Z². Insbesondere bevorzugt sind Aldimine **BA2** mit einem Rest Z¹ der Formel (III a). Am meisten bevorzugt sind die Aldimine **BA2',** welche, wie bereits erwähnt, einen Rest Z¹ der Formel (III a') aufweisen und geruchsarm oder geruchsfrei sind.

Falls die Komponente **K1** ein Aldimin **BA2** mit einem Rest Z¹ der Formel (III c) enthält, weist das Polymer **P** bevorzugt aliphatische Isocyanatgruppen auf.

In einer weiteren Ausführungsform ist die Komponente **K1** frei von blockierten Aminen, und die Komponente **K2** enthält mindestens ein blockiertes Amin **BA.**

Die Substanz **W** liegt in der Komponente **K2** bevorzugt als Bestandteil einer Paste vor, welche mindestens ein bei Raumtemperatur flüssiges Medium umfasst.

Die üblicherweise in Polyurethanzusammensetzungen eingesetzten Hilfs- und Zusatzstoffe, wie sie vorgängig bereits erwähnt wurden, können in der zweikomponentigen Zusammensetzung als Bestandteil der ersten Komponente **K1** oder als Bestandteil der zweiten Komponente **K2** vorhanden sein.

Als Bestandteil der Komponente **K2** sind neben den genannten noch weitere Hilfs- und Zusatzstoffe möglich, und zwar solche, die zusammen mit freien Isocyanatgruppen nicht oder nur kurzzeitig lagerfähig sind. Beispielsweise können in der Komponente **K2** geringe Mengen von Polyaminen vorhanden sein, um mit dem Vermischen der beiden Komponenten **K1** und **K2** unmittelbar ein strukturviskoses, weniger stark abfliessendes oder abrutschendes Material zu erhalten. Dafür geeignete Polyamine sind insbesondere Ethylendiamin, 1,2- und 1,3-Propandiamin, 1,6-Hexandiamin, 1-Amino-3-aminomethyl-3,5,5-trimethylcyclohexan (= Isophorondiamin oder IPDA), 3(4),8(9)-Bis-(aminomethyl)-tricyclo[5.2.1.0^{2,6}]decan, 1,3- und 1,4-Xylylendiamin, sowie Ethergruppen-haltige aliphatische Diamine, insbesondere Bis-(2-aminoethyl)ether, 3,6-Dioxaoctan-1,8-diamin, 4,7-Dioxadecan-1,10-diamin, 4,9-Dioxadodecan-1,12-diamin, sowie kurzkettige Polyoxyalkylen-Diamine, welche Produkte aus der Aminierung von Polyoxyalkylen-Diolen darstellen und beispielsweise erhältlich sind unter dem Namen Jeffamine^{®} (von Huntsman), unter dem Namen Polyetheramin (von BASF) oder unter dem Namen PC Amine^{®} (von Nitroii); insbesondere geeignete Polyoxyalkylen-Diamine sind Jeffamine^{®} D-230, Jeffamine^{®} D-400 und Jeffamine^{®} T-403.

Weiterhin können in der Komponente **K2** weitere Katalysatoren vorhanden sein, insbesondere Verbindungen von Zink, Mangan, Eisen, Chrom, Cobalt, Kupfer, Nickel, Molybdän, Blei, Cadmium, Quecksilber, Antimon, Vanadium, Titan, Zirconium oder Kalium, wie Zink(II)-acetat, Zink(II)-2-ethylhexanoat, Zink(II)-laurat, Zink(II)-acetylacetonat, Eisen(III)-2-ethylhexanoat, Cobalt(II)-2-ethylhexanoat, Kupfer(II)-2-ethylhexanoat, Nickel(II)-naphthenat, Aluminiumlactat, Aluminiumoleat, Diisopropoxytitan-bis-(ethylacetoacetat), Kaliumacetat; tertiäre Amine wie N-Ethyl-diisopropylamin, N,N,N',N'-Tetramethylalkylendiamine, Pentamethyl-alkylentriamine und höhere Homologe davon, Bis-(N,N-diethylaminoethyl)-adipat, Tris-(3-dimethylaminopropyl)-amin, 1,4-Diazabicyclo[2.2.2]octan (DABCO), 1,8-Diazabicyclo[5.4.0]undec-7-en (DBU), 1,5-Diazabicyclo[4.3.0]non-5-en (DBN), N-Alkylmorpholine, N,N'-Dimethylpiperazin, stickstoffaromatische Verbindungen wie 4-Dimethylamino-pyridin, N-Methylimidazol, N-Vinylimidazol oder 1,2-Dimethylimidazol; organische Ammoniumverbindungen wie Benzyltrimethylammoniumhydroxid oder alkoxylierte tertiäre Amine; sogenannte "delayed action"-Katalysatoren, welche Modifizierungen bekannter Metall- oder Aminkatalysatoren darstellen; sowie Kombinationen der genannten Verbindungen, insbesondere von Metallverbindungen und tertiären Aminen.

Die Herstellung der beiden Komponenten **K1** und **K2** erfolgt getrennt voneinander und, zumindest für die Komponente **K1,** unter Ausschluss von Feuchtigkeit. Die beiden Komponenten **K1** und **K2** sind getrennt voneinander lagerstabil, d.h. sie können jede in einer geeigneten Verpackung oder Anordnung, wie beispielsweise einem Fass, einem Beutel, einem Eimer, einer Kartusche oder einer Flasche, vor ihrer Anwendung während mehreren Monaten bis zu einem Jahr und länger aufbewahrt werden, ohne dass sie sich in ihren jeweiligen Eigenschaften in einem für ihren Gebrauch relevanten Ausmass verändern.

Zur Verwendung der zweikomponentigen Zusammensetzung **ZZ** werden die beiden Komponenten **K1** und **K2** miteinander vermischt. Das Vermischen der beiden Komponenten **K1** und **K2** kann homogen oder inhomogen erfolgen, wobei zum Vermischen insbesondere ein Statikmischer oder ein dynamischer Mischer eingesetzt wird und das Vermischen kontinuierlich oder batchweise erfolgen kann. Daraus resultiert eine vermischte Zusammensetzung **ZZ.**

Wie der Fachmann weiss, ist der Term "homogen vermischt", insbesondere im Kontext von pastösen Zusammensetzungen, nicht absolut zu verstehen. Der Term bedeutet in der üblichen Verwendung nämlich, dass von Auge keine Mischgrenzen mehr sichtbar sind, während dies beispielsweise unter dem Mikroskop durchaus noch möglich ist.

In einer bevorzugten Ausführungsform erfolgt das Vermischen der beiden Komponenten **K1** und **K2** im Wesentlichen homogen. Dies kann insbesondere durch die Verwendung von dynamischen Mischern erreicht werden. Es ist auch möglich, durch die Verwendung von Statikmischern mit vielen Mischelementen, beispielsweise des Typs Sulzer Quadro^{®} (erhältlich von der Firma Sulzer Chemtech) mit 18 oder mehr Mischelementen, zu einer im Wesentlichen homogenen Vermischung zu kommen.

In einer weiteren Ausführungsform erfolgt die Vermischung der beiden Komponenten **K1** und **K2** inhomogen, beispielsweise in Form einer schichtenartigen oder einer strangartigen Vermischung. Eine schichtenartige Vermischung kann insbesondere durch die Verwendung von Statikmischern erreicht werden, wobei diese eine begrenzte Zahl von Statikmischer-Elementen aufweisen.

Für den Fall, dass die Komponenten **K1** und **K2** inhomogen vermischt werden, ist die Komponente **K2** bevorzugt in einer wesentlich geringeren Menge bezogen auf die Komponente **K1** vorhanden, und enthält die Komponente **K2** neben der Substanz **W** bevorzugt mindestens ein bei Raumtemperatur flüssiges Polymer.

Die einkomponentige Zusammensetzung **EZ** ist gegenüber der zweikomponentigen Zusammensetzung **ZZ** bevorzugt.

Die Aushärtung der beschriebenen härtbaren Zusammensetzung wird primär durch die Art und Weise bestimmt, mit der die Zusammensetzung in Kontakt mit Feuchtigkeit bzw. Wasser kommt.

Die blockierten Aminogruppen des blockierten Amins **BA** haben die Eigenschaft, bei Kontakt mit Feuchtigkeit zu hydrolysieren. Das zur Hydrolyse benötigte Wasser kann entweder aus der Luft stammen und in Form von Luftfeuchtigkeit in die Zusammensetzung eindringen, oder es kann aus der Substanz **W** bei deren Erwärmung auf eine Mindesttemperatur im Bereich von 50 °C bis 100 °C erzeugt werden. Die in der Zusammensetzung vorhandenen Isocyanatgruppen reagieren mit den hydrolysierenden blockierten Aminogruppen; dabei wird ein Keton oder ein Aldehyd freigesetzt. Die Reaktion der Isocyanatgruppen mit den hydrolysierenden blockierten Aminogruppen muss dabei nicht notwendigerweise über freie Aminogruppen erfolgen, sondern es sind auch Reaktionen mit Zwischenstufen der Hydrolyse möglich. So kann beispielsweise eine hydrolysierende Aldiminogruppe in Form einer Halbaminal-Gruppe mit einer Isocyanatgruppe reagieren. Im Verhältnis zu den in der Zusammensetzung vorhandenen blockierten Aminogruppen überschüssige Isocyanatgruppen reagieren mit gegebenenfalls vorhandenen Reaktivgruppen **R** sowie direkt mit vorhandener Feuchtigkeit. Als Resultat dieser Reaktionen härtet die Zusammensetzung zu einem festen Material aus. Dieser Vorgang wird auch als Vernetzung bezeichnet.

Die für die Aushärtung benötigte Feuchtigkeit kann, wie bereits erwähnt, entweder aus der Luft stammen (Luftfeuchtigkeit), oder sie kann aus der Substanz **W** bei Erwärmung auf eine Mindesttemperatur im Bereich von 50 °C bis 100 °C, bevorzugt 60°C bis 100 °C, insbesondere 70 °C bis 100 °C, erzeugt werden. Für die Aushärtung der beschriebenen härtbaren Zusammensetzung gibt es folglich zwei verschiedene, untereinander kombinierbare Möglichkeiten; beide verlaufen aber über die Reaktion mit Feuchtigkeit und führen in Bezug auf das nach vollständiger Aushärtung entstehende Material und dessen Eigenschaften, beispielsweise die mechanische Festigkeit, weitgehend zum gleichen Ergebnis.

Einerseits kann die härtbare Zusammensetzung also ohne Wärmeeinwirkung mittels Feuchtigkeit aus der Luft aushärten. Dabei verläuft die Aushärtung eher langsam, und zwar von aussen nach innen, parallel zum Eindringen der Luftfeuchtigkeit in die Zusammensetzung. Auf der Zusammensetzung bildet sich eine Haut aus ausgehärtetem Material, welche allmählich dicker wird, bis das ganze applizierte Material schliesslich ausgehärtet ist. Vorteihaft bei dieser Aushärtung ohne Wärmeeinwirkung ist die lange Verarbeitungszeit, welche es einem Verarbeiter ermöglicht, das applizierte Material exakt zu plazieren und gegebenenfalls zu fügende Fügeteile exakt auszurichten, solange das Material noch nicht zu stark angehärtet ist.

Andererseits kann die härtbare Zusammensetzung auch mittels Einwirkung von Wärme aushärten, wobei die Temperatur der Zusammensetzung während der Wärmeaushärtung mindestens 50 °C beträgt und vorteilhaft zwischen 60 und 160 °C, bevorzugt zwischen 80 und 140 °C, besonders bevorzugt zwischen 90 und 130 °C, liegt. Dabei wird Wasser aus der Substanz **W** erzeugt, welches entweder unmittelbar in der Zusammensetzung verfügbar ist, oder, falls die Substanz **W** in verkapselter Form in der Zusammensetzung vorliegt, nach dem Aufbrechen der Kapseln in der Zusammensetzung verfügbar ist. Die erhöhte Temperatur und das sofortige Vorhandensein von Wasser in der gesamten Zusammensetzung bewirken eine sehr schnelle Aushärtung. Da die Aushärtung zum grösseren Teil über das blockierte Amin **BA** und nur zu einem kleinen Teil über die direkte Reaktion mit Feuchtigkeit erfolgt, härtet die Zusammensetzung weitgehend blasenfrei aus.

Bevorzugt wird die härtbare Zusammensetzung, mindestens teilweise, durch das Zuführen von Wärme ausgehärtet, wobei die Temperatur der Zusammensetzung während der Wärmeeinwirkung mindestens 50 °C beträgt und vorteilhaft zwischen 60 °C und 160 °C, bevorzugt zwischen 80 °C und 140 °C, besonders bevorzugt zwischen 90 °C und 130 °C, liegt.

Die für eine Wärmeaushärtung der Zusammensetzung notwendige Wärme kann mit jeder beliebigen Energiequelle erzeugt werden. Geeignete Mittel zur Erwärmung sind insbesondere Umluftöfen, Heissluftgebläse oder Infrarotstrahler. Falls mindestens eines der Bauteile ferromagnetisch ist und/oder die Zusammensetzung ein piezoelektrisches, ferromagnetisches oder superparamagnetisches Material enthält, kann die Erwärmung auch durch Anlegen von magnetischen und/oder elektrischen Wechselfeldern, insbesondere Mikrowellen oder Induktion, erfolgen; dies erlaubt ein besonders rasches Erwärmen der beschriebenen Zusammensetzungen.

Die beschriebene härtbare Zusammensetzung zeichnet sich dadurch aus, dass sie bei Raumtemperatur oder leicht erhöhter Temperatur eine gute Lagerstabilität aufweist, gut applizierbar ist und über eine relativ lange Offenzeit verfügt. Beim anschliessenden Zuführen von Wärme härtet sie sehr schnell aus und neigt dabei insbesondere nicht zur Bildung von Blasen. Sie zeigt dabei einen raschen Festigkeitsaufbau (Frühfestigkeit) und kann daher als solche, beziehungsweise in einem unter ihrer Verwendung erzeugten Verbund, schon kurze Zeit nach der Applikation bearbeitet oder belastet werden, beispielsweise durch Begehen, durch Abschleifen, durch Transport oder durch die Entfernung von fixierenden Halterungen. Nach der Aushärtung verfügt sie über eine hohe Festigkeit. Weiterhin zeichnet sich die beschriebene härtbare Zusammensetzung dadurch aus, dass sie wahlweise ohne die Einwirkung von Wärme oder durch die Einwirkung von Wärme und Feuchtigkeit aushärtet, wobei die Eigenschaften der ausgehärteten Zusammensetzung, insbesondere die Endfestigkeit, weitgehend unabhängig von den Aushärtungsbedingungen sind. Dies bedeutet insbesondere, dass die Zusammensetzung auch bei ungeplanterweise unvollständiger oder gänzlich ausbleibender Wärmezufuhr - verursacht beispielsweise durch fehlerhafte Ausführung oder Ausrüstung oder durch stark wärmeabsorbierende Substrate - trotzdem vollständig aushärtet, beziehungsweise nachhärtet, und so in ihren Eigenschaften nicht abfällt. Dieses vorteilhafte Verhalten ergibt sich aus der Tatsache, dass die Zusammensetzung sowohl durch Luftfeuchtigkeit als auch mittels Einwirkung von Wärme über den gleichen Vernetzungsmechanismus aushärtet; der Unterschied liegt einzig in der Herkunft des Wassers, das die Vernetzung bewirkt.

Ein zusätzlicher Vorteil besteht bei der ausschliesslichen Verwendung von Aldiminen **BA2'** als blockiertes Amin **BA.** Diese besonders bevorzugten härtbaren Zusammensetzungen sind vor, während und nach der Aushärtung geruchsarm oder geruchsfrei und der bei der Aushärtung frei werdende Aldehyd verbleibt aufgrund seines hohen Molekulargewichts weitgehend in der ausgehärteten Zusammensetzung, wodurch diese kaum Schwund aufweist. Eine geruchsarme oder geruchsfreie Aushärtung ist für viele Anwendungen, insbesondere in Innenräumen, ein grosser Vorteil, wenn nicht sogar eine Voraussetzung.

Ein weiterer zusätzlicher Vorteil besteht bei der Verwendung einer einkomponentigen Zusammensetzung **EZ,** da zu deren Applikation kein Mischvorgang notwendig ist und somit keine Mischfehler auftreten können und einfache Apparaturen zur Applikation ausreichen.

Die härtbare Zusammensetzung kann auf verschiedene Weise verwendet werden. Ein Anwender kann die härtbare Zusammensetzung beispielsweise bei Raumtemperatur applizieren. Dabei kann er die lange Offenzeit nutzen. Ist die Zusammensetzung in befriedigender Art und Weise appliziert, so kann der Anwender, falls gewünscht, die applizierte Zusammensetzung auf eine geeignete Temperatur aufheizen, wobei die Zusammensetzung, wie beschrieben, Wasser bildet und dadurch beschleunigt Festigkeit aufbaut und aushärtet. Mit der hier beschriebenen Zusammensetzung ist auch eine Applikation denkbar, bei der gewisse Stellen der applizierten Zusammensetzung - im folgenden auch "Haltepunkte" genannt - gezielt aufgeheizt werden, wodurch diese Haltepunkte sehr schnell aushärten, während die restliche applizierte Zusammensetzung mittels Feuchtigkeit aus der Luft ohne Einwirkung von Wärme allmählich ebenfalls aushärtet. Durch das schnelle Aushärten von solchen Haltepunkten kann beispielsweise ein Fügeteil nach der korrekten Platzierung in Position gehalten werden, ohne dass die gesamte Zusammensetzung aufgeheizt werden muss.

Die härtbare Zusammensetzung ist geeignet als Klebstoff, Dichtstoff oder Beschichtung, insbesondere als Klebstoff für Industrieanwendungen, beispielsweise für die Montage von Automobilen, Transportfahrzeugen und Schiffen.

Besonders geeignet ist sie für Anwendungen, bei welchen ein heisshärtendes System gewünscht wird.

Falls die härtbare Zusammensetzung als Klebstoff für elastische Verklebungen im Fahrzeugbau verwendet wird, weist sie bevorzugt eine pastöse Konsistenz mit strukturviskosen Eigenschaften auf. Ein solcher Klebstoff wird mittels einer geeigneten Vorrichtung auf das Substrat aufgetragen, bevorzugt in Form einer Raupe, wobei diese eine im Wesentlichen runde oder dreieckige Querschnittsfläche aufweisen kann. Geeignete Methoden zum Auftragen des Klebstoffes sind beispielsweise die Applikation aus handelsüblichen Kartuschen, welche manuell oder mittels Druckluft betrieben werden, oder aus einem Fass oder Hobbock mittels einer Förderpumpe oder eines Extruders, gegebenenfalls mittels eines Applikations-Roboters. Ein Klebstoff mit guten Applikationseigenschaften weist eine hohe Standfestigkeit und einen kurzen Fadenzug auf. Das heisst, er bleibt nach der Applikation in der applizierten Form stehen, fliesst also nicht auseinander, und zieht nach dem Absetzen des Applikationsgerätes keinen oder nur einen sehr kurzen Faden, so dass das Substrat nicht verschmutzt wird.

Elastische Verklebungen im Fahrzeugbau sind beispielsweise das Ankleben von Teilen, wie Kunststoffabdeckungen, Zierleisten, Flansche, Stosstangen, Führerkabinen oder andere Anbauteile, an die lackierte Karosserie eines Transportmittels, oder das Einkleben von Scheiben in die Karosserie. Als Fahrzeuge genannt werden sollen beispielsweise Automobile, Lastkraftwagen, Busse, Schienenfahrzeuge und Schiffe.

Ein weiterer Aspekt der vorliegenden Erfindung betrifft ein Verfahren zum Verkleben von einem Substrat **S1** mit einem Substrat **S2,** welches die Schritte umfasst:
i) Applikation der beschriebenen Zusammensetzung auf ein Substrat **S1;**
ii) Kontaktieren der applizierten Zusammensetzung mit einem Substrat **S2** innerhalb der Offenzeit der Zusammensetzung;
   oder
   i') Applikation der beschriebenen Zusammensetzung auf ein Substrat **S1** und auf ein Substrat **S2;**
   ii') Kontaktieren der applizierten Zusammensetzung miteinander innerhalb der Offenzeit der Zusammensetzung;
   und die Zusammensetzung gegebenenfalls anschliessend in einem Schritt iii) mit einer geeigneten Methode auf eine Mindesttemperatur im Bereich von 50 °C bis 100 °C, vorteilhaft zwischen 60 °C und 160 °C, bevorzugt zwischen 80 °C und 140 °C, besonders bevorzugt zwischen 90 °C und 130 °C, aufgewärmt wird;
   wobei das Substrat **S2** aus dem gleichen oder einem unterschiedlichen Material wie das Substrat **S1** besteht.

In diesem Verfahren sind geeignete Substrate **S1** und/oder **S2** insbesondere
- Glas, Glaskeramik, Beton, Mörtel, Backstein, Ziegel, Gips und Natursteine wie Granit oder Marmor;
- Metalle oder Legierungen wie Aluminium, Stahl, Eisen, Buntmetalle, verzinkte Metalle;
- Leder, Textilien, Papier, Holz, mit Harz gebundene Holzwerkstoffe, Harz-Textil-Verbundwerkstoffe und weitere sogenannte Polymer-Composites;
- Kunststoffe wie Polyvinylchlorid (Hart- und Weich-PVC), AcrylonitrilButadien-Styrol-Copolymere (ABS), SMC (Sheet Moulding Compounds), Polycarbonat (PC), Polyamid (PA), Polyester, Poly(methylmethacrylat) (PMMA), Epoxidharze, Polyurethane (PUR), Polyoxymethylen (POM), Polyolefine (PO), Polyethylen (PE) oder Polypropylen (PP), Ethylen/Propylen-Copolymere (EPM) und Ethylen/Propylen/Dien-Terpolymere (EPDM), wobei die Kunststoffe bevorzugt mittels Plasma, Corona oder Flammen oberflächenbehandelt sein können;
- beschichtete Substrate wie pulverbeschichtete Metalle oder Legierungen; sowie Farben und Lacke.

Die Substrate können bei Bedarf vor dem Applizieren der Zusammensetzung vorbehandelt werden. Derartige Vorbehandlungen umfassen insbesondere physikalische und/oder chemische Reinigungsverfahren, beispielsweise Schleifen, Sandstrahlen, Bürsten oder dergleichen, oder Behandeln mit Reinigern oder Lösemitteln oder das Aufbringen eines Haftvermittlers, einer Haftvermittlerlösung oder eines Primers.

Die Applikation der - bei zweikomponentigen Zusammensetzungen vermischten - Zusammensetzung erfolgt vorzugsweise bei Raumtemperatur oder bei einer nur leicht höheren Temperatur, insbesondere unterhalb einer Temperatur von 50 °C.

Aus diesem beschriebenen Verfahren zum Verkleben - beziehungsweise aus der Verwendung einer der beschriebenen Zusammensetzungen als Klebstoff - entsteht ein Artikel.

Dieser Artikel ist insbesondere ein Bauwerk, insbesondere ein Bauwerk des Hoch- oder Tiefbaus, oder ein industrielles Gut oder ein Konsumgut, insbesondere ein Fenster, eine Haushaltmaschine, oder ein Transportmittel, insbesondere ein Fahrzeug zu Wasser oder zu Lande, bevorzugt ein Automobil, ein Bus, ein Lastkraftwagen, ein Zug oder ein Schiff, oder ein Anbauteil eines Transportmittels, oder ein Artikel der Möbel-, Textil- oder Verpackungsindustrie.

### Beispiele

Als "Normklima" wird eine Temperatur von 23±1 °C und eine relative Luftfeuchtigkeit von 50±5% bezeichnet.

### 1. Beschreibung der Messmethoden

Der **Amingehalt,** das heisst der totale Gehalt an blockierten (Aldiminogruppen) und freien Aminogruppen in den hergestellten Verbindungen, wurde titrimetrisch bestimmt (mit 0.1 N HClO₄ in Eisessig, gegen Kristallviolett) und ist stets angegeben in mmol N/g.

### 2. Herstellung von Aldiminen

### Aldimin A-1

In einem Rundkolben wurden unter Stickstoffatmosphäre 743 g destilliertes 2,2-Dimethyl-3-lauroyloxy-propanal vorgelegt. Unter kräftigem Rühren wurden aus einem Eintropftrichter 300 g Polyetherdiamin (Polyoxypropylen-Diamin mit einem mittleren Molekulargewicht von ca. 240 g/mol; Jeffamine^{®} D-230, Huntsman; Amingehalt 8.29 mmol N/g) langsam zugegeben. Danach wurden die flüchtigen Bestandteile im Vakuum entfernt (10 mbar, 80 °C). Ausbeute: 995 g klare, blassgelbe Flüssigkeit mit einem Amingehalt von 2.50 mmol N/g.

### Aldimin A-2

In einem Rundkolben wurden unter Stickstoffatmosphäre 524 g destilliertes 2,2-Dimethyl-3-lauroyloxy-propanal vorgelegt. Unter kräftigem Rühren wurden aus einem beheizten Eintropftrichter 100 g 1,6-Hexamethylendiamin (BASF; Amingehalt 17.0 mmol N/g) langsam zugegeben. Danach wurden die flüchtigen Bestandteile im Vakuum entfernt (10 mbar, 80 °C). Ausbeute: 577 g klare, blassgelbe Flüssigkeit mit einem Amingehalt von 2.85 mmol N/g.

### 3. Herstellung von Polyurethanpolymeren

### Polymer P-1

1300 g Polyoxypropylen-Diol (Acclaim^{®} 4200 N, Bayer; OH-Zahl 28.5 mg KOH/g), 2600 g Polyoxypropylenpolyoxyethylen-Triol (Caradol^{®} MD34-02, Shell; OH-Zahl 35.0 mg KOH/g), 600 g 4,4'-Methylendiphenyldiisocyanat (4,4'-MDI, Desmodur^{®} 44 MC L, Bayer) und 500 g Diisodecylphthalat (DIDP; Palatinol^{®} Z, BASF) wurden nach bekanntem Verfahren bei 80 °C zu einem NCO-terminierten Polyurethanpolymer mit einem Gehalt an freien Isocyanat-Gruppen von 2.05 Gewichts-% umgesetzt.

### Polymer P-2

590 g Polyol Acclaim^{®} 4200 N (Polypropylenoxid-Diol, OH-Zahl 28.5 mg KOH/g; Bayer), 1180 g Polyol Caradol^{®} MD34-02 (Polypropylenoxidpolyethylenoxid-Triol, OH-Zahl 35.0 mg KOH/g; Shell) und 230 g Isophorondiisocyanat (IPDI; Vestanat^{®} IPDI, Degussa) wurden nach bekanntem Verfahren bei 80 °C zu einem NCO-terminierten Polyurethanpolymer mit einem Gehalt an freien Isocyanat-Gruppen von 2.10 Gewichts-% umgesetzt.

### 4. Herstellung einer Paste mit Wasser erzeugenden Substanz

### Paste mit Wasser erzeugender Substanz W1-Paste

In einem Dispergiergerät wurden 30 g Borsäure (maximale Teilchengrösse < 90 µm, bestimmt mittels einem Grindometer nach DIN EN 21 524) mit 62 g Diisodecylphthalat (DIDP; Palatinol^{®} Z, BASF) und 8 g hydrophiler pyrogener Kieselsäure zu einer feinen Paste verarbeitet.

### 5. Herstellung von Klebstoff-Grundmassen

### Klebstoff-Grundmasse KG-1

In einem Vakuummischer wurden 1500 g Polymer ***P-1,*** 300 g Polymer ***P-2,*** 320 g Aldimin ***A-1,*** 15 g p-Toluyl-sulfonylisocyanat (Zusatzmittel TI^{®}, Bayer), 1200 g *Thixotropierpaste,* 1500 g Kreide, 150 g hydrophobe pyrogene Kieselsäure und 15 g Salicylsäure-Lösung (5 Gew.-% in Dioctyladipat) unter Feuchtigkeitsausschluss zu einer knollenfreien, homogenen Paste verarbeitet, welche unter Ausschluss von Feuchtigkeit aufbewahrt wurde.

Die *Thixotropierpaste* wurde wie folgt hergestellt:
In einem Vakuummischer wurden 3000 g Diisodecylphthalat (DIDP; Palatinol^{®} Z, BASF) und 480 g 4,4'-Methylendiphenyldiisocyanat (MDI, Desmodur^{®} 44 MC L, Bayer) vorgelegt und leicht aufgewärmt. Dann wurden unter starkem Rühren 270 g Monobutylamin langsam zugetropft. Die entstehende Paste wurde unter Vakuum und Kühlung eine Stunde weitergerührt.

### Klebstoff-Grundmasse KG-2

In einem Vakuummischer wurden 1800 g Polymer ***P-1,*** 600 g Polymer ***P-2,*** 370 g Aldimin ***A-2,*** 600 g Diisodecylphthalat (DIDP; Palatinol^{®} Z, BASF), 15 g p-Toluyl-sulfonylisocyanat (Zusatzmittel TI^{®}, Bayer), 900 g Russ, 600 g calciniertes Kaolin, 100 g hydrophobe pyrogene Kieselsäure (Aerosil^{®} R972, Evonik) und 15 g Salicylsäure-Lösung (5 Gew.-% in Dioctyladipat) unter Feuchtigkeitsausschluss zu einer knollenfreien, homogenen Paste verarbeitet, welche unter Ausschluss von Feuchtigkeit aufbewahrt wurde.

### 6. Herstellung von einkomponentigen Klebstoffen

### Beispiel 1

In einem Vakuummischer wurden 400 g der Klebstoff-Grundmasse ***KG-1*** mit 14 g *W1-Paste* (Paste mit Wasser erzeugender Substanz, Herstellung oben erwähnt) unter Feuchtigkeitsausschluss zu einer homogenen Paste verarbeitet, wobei darauf geachtet wurde, dass die Temperatur während dem Mischen nicht über 50 °C stieg. Die erhaltene Paste wurde unverzüglich in eine innenlackierte Aluminium-Kartusche abgefüllt und die Kartusche luftdicht verschlossen.

Der so erhaltene Klebstoff wurde wie im Folgenden beschrieben geprüft.

Als Mass für die **Lagerstabilität** wurde die Zeit bis zur Erreichung der doppelten Viskosität bestimmt. Dazu wurde der Klebstoff in einer verschlossenen Kartusche bei 23 °C gelagert und von Zeit zu Zeit die Viskosität des Klebstoffes bestimmt.

Zur Bestimmung der **Standfestigkeit** wurde der Klebstoff mittels Kartuschenpistole über eine Dreiecksdüse als waagrecht verlaufende Dreiecksraupe mit einem Basisdurchmesser von 8 mm und einer Höhe (Abstand der Dreiecksspitze von der Basis) von 20 mm auf ein senkrecht stehendes Stück Pappkarton aufgetragen. Nach 5 Minuten wurde gemessen, wie weit sich die Spitze abgesenkt, d.h. von der ursprünglichen Position in der Mitte der Dreiecksraupe wegbewegt, hatte. Als "sehr gut" wurde bewertet, wenn sich die Spitze in vollständig oder annährend unveränderter Position befand, als "gut", wenn die Spitze sich zwischen Mitte und Basisende befand. Zur Bestimmung der **Hautbildungszeit** (Zeit bis zur Klebefreiheit, "tack-free time") wurden einige Gramm des raumtemperaturwarmen Klebstoffs in einer Schichtdicke von ca. 2 mm auf Pappkarton aufgetragen und im Normklima die Zeit bestimmt, die es dauerte, bis beim leichten Antippen der Oberfläche des Klebstoffs mittels einer Pipette aus LDPE erstmals keine Rückstände auf der Pipette mehr zurückblieben.

Zur Beurteilung des Aushärtungsverhaltens wurde der Klebstoff auf einer PTFE-beschichteten Folie zu einem Film von 2 mm Dicke verpresst und dieser in einem Umluftofen erwärmt. Dabei wurden sowohl die Ofentemperatur wie auch die Erwärmungsdauer ("Aushärtungsbedingungen") variiert. Der dabei erhaltene ausgehärtete Film wurde entweder direkt ("ohne Nachhärtung") oder nach zusätzlichen 24 Stunden Lagerung im Normklima ("mit Nachhärtung") auf mechanische Eigenschaften geprüft, indem aus dem Film einige Hanteln mit einer Länge von 75 mm, bei einer Steglänge von 30 mm und einer Stegbreite von 4 mm, ausgestanzt und diese gemäss DIN EN 53504 bei einer Zuggeschwindigkeit von 200 mm/min auf **Zugfestigkeit** (Bruchkraft), **Bruchdehnung** und **E-Modul** (bei 0-50% Dehnung) geprüft wurden.

Qualitativ geprüft wurden weiterhin die **Blasenbildung** durch visuelle Beurteilung im ausgehärteten Klebstoff sowie der **Geruch** während und unmittelbar nach der Aushärtung.

Der Klebstoff des Beispiels 1 wies eine Zeit bis zur Erreichung der doppelten Viskosität von 30 Tagen, eine Hautbildungszeit von 220 Minuten und eine gute Standfestigkeit auf.

Die Ergebnisse zur Beurteilung des Aushärtungsverhaltens sind in Tabelle 1 dargestellt.

**Tabelle 1: Aushärtungsverhalten des Klebstofifs des Beispiels 1.**

| Aushärtungsbedingungen | **80 °C,** | **100 °C,** | **120 °C,** | **140 °C,** | **Normklima,** |
|---|---|---|---|---|---|
| | **30 min** | **30 min** | **20 min** | **10 min** | **4d** |
| ohne Nachhärtung: | | | | | |
| Zugfestigkeit [MPa] | 1.0 | 2.1 | 2.4 | 2.2 | 3.3 |
| Bruchdehnung [%] | 50 | 240 | 240 | 210 | 330 |
| E-Modul [MPa] | - | 2.3 | 2.4 | 2.1 | 3.0 |
| mit Nachhärtung (24 h Normklima): | | | | | |
| Zugfestigkeit [MPa] | 2.2 | 2.6 | 2.4 | 2.3 | n.b. |
| Bruchdehnung [%] | 210 | 230 | 220 | 220 | n.b. |
| E-Modul [MPa] | 2.9 | 3.0 | 2.4 | 2.4 | n.b. |
| Blasenbildung | keine | keine | keine | keine | keine |
| Geruch | kein | kein | kein | kein | Kein |
| (n.b. = nicht bestimmt) | | | | | |

Aus der Tabelle 1 ist ersichtlich, dass der einkomponentige Klebstoff des Beispiels 1 sowohl mit als auch ohne Wärmeeinwirkung ohne die Bildung von Blasen und ohne Geruchsbildung aushärtet. Mit Wärmeeinwirkung ist die Aushärtung sehr schnell. Bereits eine Erwärmung auf 80 °C während 30 Minuten ergibt ein Material mit einer Zugfestigkeit von 1 MPa. Eine höhere Temperatur bewirkt eine noch schnellere Aushärtung. Beispielsweise ist der Klebstoff nach 10 Minuten bei 140 °C fast vollständig ausgehärtet. Des weiteren wird ersichtlich, dass die mechanischen Eigenschaften der unter Wärmeeinfluss ausgehärteten Klebstoffproben weitgehend denen der allein mittels Luftfeuchtigkeit im Normklima ausgehärteten Probe entspricht.

### Beispiel 2

In einem Vakuummischer wurden 400 g der Klebstoff-Grundmasse ***KG-2*** mit 14 g *W1-Paste* (Paste mit Wasser erzeugender Substanz, Herstellung oben erwähnt) unter Feuchtigkeitsausschluss zu einer homogenen Paste verarbeitet, diese unverzüglich in eine innenlackierte Aluminium-Kartusche abgefüllt und die Kartusche luftdicht verschlossen.

Der so erhaltene Klebstoff wurde wie bei Beispiel 1 beschrieben geprüft.

Der Klebstoff des Beispiels 2 wies eine Zeit bis zur Erreichung der doppelten Viskosität von 14 Tagen, eine Hautbildungszeit von 180 Minuten und eine sehr gute Standfestigkeit auf.

Die Ergebnisse zur Beurteilung des Aushärtungsverhaltens sind in Tabelle 2 dargestellt.

**Tabelle 2: Aushärtungsverhalten des Klebstofifs des Beispiels 2.**

| Aushärtungsbedingungen | **100 °C,** | **120 °C,** | **120 °C,** | **140 °C,** | **Normklima,** |
|---|---|---|---|---|---|
| | **30 min** | **20 min** | **30 min** | **10 min** | **4d** |
| ohne Nachhärtung: | | | | | |
| Zugfestigkeit [MPa] | 1.4 | 3.7 | 4.1 | 4.0 | 9.4 |
| Bruchdehnung [%] | 140 | 270 | 320 | 300 | 520 |
| E-Modul [MPa] | 1.5 | 2.0 | 2.0 | 1.7 | 4.2 |
| mit Nachhärtung (24 h Normklima): | | | | | |
| Zugfestigkeit [MPa] | 6.0 | n.b. | 8.2 | 8.8 | n.b. |
| Bruchdehnung [%] | 450 | n.b. | 520 | 540 | n.b. |
| E-Modul [MPa] | 3.0 | n.b. | 3.2 | 2.7 | n.b. |
| Blasenbildung | keine | keine | keine | keine | keine |
| Geruch | kein | kein | kein | kein | kein |
| (n.b. = nicht bestimmt) | | | | | |

Aus der Tabelle 2 ist ersichtlich, dass der einkomponentige Klebstoff des Beispiels 2 sowohl mit als auch ohne Wärmeeinwirkung ohne die Bildung von Blasen und ohne Geruchsbildung aushärtet. Mit Wärmeeinwirkung ist die Aushärtung sehr schnell. Bereits eine Erwärmung auf 100 °C während 30 Minuten ergibt ein Material mit einer Zugfestigkeit von 1.4 MPa. Eine höhere Temperatur bewirkt eine noch schnellere Aushärtung. Die mechanischen Eigenschaften der unter Wärmeeinfluss ausgehärteten Klebstoffproben entsprechen weitgehend denen der allein mittels Luftfeuchtigkeit im Normklima ausgehärteten Probe.

### 7. Herstellung von zweikomponentigen Klebstoffen

### Beispiel 3

Als erste Komponente **K1** wurde die Klebstoff-Grundmasse ***KG-1*** und als zweite Komponente **K2** die VV1-Paste (Paste mit Wasser erzeugender Substanz, Herstellung oben erwähnt) verwendet. Die beiden Komponenten **K1** und **K2** wurden im Gewichtsverhältnis 96.5:3.5 im Wesentlichen homogen vermischt und wie bei Beispiel 1 beschrieben auf Applikationseigenschaften und Aushärtungsverhalten geprüft.

Das Mischen der beiden Komponenten **K1** und **K2** erfolgte kontinuierlich während der Applikation, indem der Klebstoff mittels einer Zweikomponentenpistole mit aufgesetztem Statikmischer vom Typ Sulzer Quadro^{®} (erhältlich von Sulzer Chemtech) mit 24 Mischelementen appliziert wurde.

Der so erhaltene Klebstoff wurde wie bei Beispiel 1 beschrieben geprüft.

Der Klebstoff des Beispiels 3 wies eine Hautbildungszeit von 240 Minuten und eine gute bis sehr gute Standfestigkeit auf.

Die Ergebnisse zur Beurteilung des Aushärtungsverhaltens sind in Tabelle 3 dargestellt.

**Tabelle 3: Aushärtungsverhalten des Klebstoffs des Beispiels 3.**

| Aushärtungsbedingungen | **90°C** | **100°C** | **110°C** | **120°C** | **130°C** | **140°C** | **Normklima** |
|---|---|---|---|---|---|---|---|
| | **5 min** | **5 min** | **5 min** | **5 min** | **5 min** | **5 min** | **4d** |
| ohne Nachhärtung: | | | | | | | |
| Zugfestigkeit [MPa] | 0.5 | 1.0 | 1.7 | 2.0 | 2.4 | 2.5 | 3.1 |
| Bruchdehnung [%] | 20 | 45 | 100 | 170 | 220 | 230 | 310 |
| E-Modul [MPa] | - | - | 2.8 | 2.5 | 2.7 | 2.6 | 3.0 |
| Blasenbildung | keine | keine | keine | keine | keine | keine | keine |
| Geruch | kein | kein | kein | kein | kein | kein | kein |

Aus der Tabelle 3 ist ersichtlich, dass der zweikomponentige Klebstoff des Beispiels 3 sowohl mit als auch ohne Wärmeeinwirkung ohne die Bildung von Blasen und ohne Geruchsbildung aushärtet. Mit Wärmeeinwirkung ist die Aushärtung sehr schnell. Bereits eine Erwärmung auf 90 °C während 5 Minuten ergibt ein Material mit einer Zugfestigkeit von 0.5 MPa. Eine höhere Temperatur bewirkt eine noch schnellere Aushärtung. Beispielsweise ist der Klebstoff nach 5 Minuten bei 130 °C fast vollständig ausgehärtet. Die mechanischen Eigenschaften der unter Wärmeeinfluss ausgehärteten Klebstoffproben entsprechen weitgehend denen der allein mittels Luftfeuchtigkeit im Normklima ausgehärteten Probe.

## Patentansprüche

1. Härtbare Zusammensetzung umfassend
a) mindestens ein Isocyanatgruppen aufweisendes Polymer **P,**
b) mindestens ein blockiertes Amin BA, welches eine blockierte, hydrolytisch aktivierbare Aminogruppe und entweder mindestens eine weitere blockierte, hydrolytisch aktivierbare Aminogruppe oder mindestens eine Reaktivgruppe **R**, ausgewählt aus der Gruppe bestehend aus Hydroxylgruppe, Mercaptogruppe und sekundäre Aminogruppe, aufweist, und
c) mindestens eine feinteilige, bei Raumtemperatur feste, bei Erwärmung auf eine Mindesttemperatur im Bereich von 50 °C bis 100 °C Wasser erzeugende Substanz **W.**

2. Härtbare Zusammensetzung gemäss Anspruch 1, **dadurch gekennzeichnet, dass** das blockiertes Amin **BA** ein Oxazolidin **BA1** ist, welches eine Oxazolidinogruppe und entweder mindestens eine weitere blockierte, hydrolytisch aktivierbare Aminogruppe oder mindestens eine Reaktivgruppe **R** aufweist.

3. Härtbare Zusammensetzung gemäss Anspruch 1, **dadurch gekennzeichnet, dass** das blockierte Amin **BA** ein Aldimin **BA2** der Formel (I) ist, 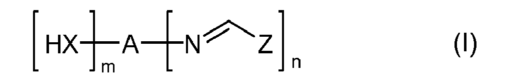 wobei
n für 1 oder 2 oder 3 oder 4 steht, und
m für 0 oder 1 steht,
mit der Massgabe, dass m+n für 2 oder 3 oder 4 steht; und wobei
A entweder für einen m+n-wertigen Kohlenwasserstoffrest mit 2 bis 30 C-Atomen, welcher gegebenenfalls mindestens ein Heteroatom, ins- besondere in der Form von Ether-Sauerstoff oder tertiärem Amin- Stickstoff, enthält, steht,
oder zusammen mit R⁷ für einen (n+2)-wertigen Kohlenwasserstoff- rest mit 3 bis 30 C-Atomen, welcher gegebenenfalls mindestens ein Heteroatom, insbesondere in der Form von Ether-Sauerstoff oder tertiärem Amin-Stickstoff, enthält, steht;
X für O oder S oder N-R⁶ oder N-R⁷ steht,
wobei R⁶
entweder für einen einwertigen Kohlenwasserstoffrest mit 1 bis 20 C-Atomen, welcher gegebenenfalls mindestens eine Carbonsäureester-, Nitril-, Nitro-, Phosphonsäureester-, Sulfon- oder Sulfonsäureester-Gruppe aufweist, steht,
oder für einen Substituenten der Formel (II) steht, 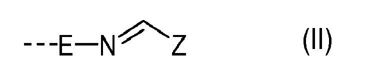 wobei
E für einen zweiwertigen, gegebenenfalls Ether-Sauerstoff oder tertiären Amin-Stickstoff aufweisenden, Kohlenwasserstoffrest mit 2 bis 12 C-Atomen steht, und
R⁷ zusammen mit A für einen (n+2)-wertigen Kohlenwasserstoffrest mit 3 bis 30 C-Atomen, welcher gegebenenfalls mindestens ein Heteroatom, insbesondere in Form von Ether-Sauerstoff oder tertiärem Amin-Stickstoff, enthält, steht; und
Z frei ist von Reaktivgruppen R und von primären Aminogruppen und entweder für einen Rest Z¹ der Formel (III) steht 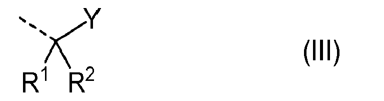 wobei Y für einen einwertigen Kohlenwasserstoffrest mit 1 bis 32 C-Atomen steht, welcher gegebenenfalls mindestens ein Heteroatom, insbesondere Sauerstoff oder Stickstoff in der Form von Ether-, Carbonyl-, Ester-, Amido-, Harnstoff-, Urethan- oder tertiären Aminogruppen, aufweist, und
R¹ und R² entweder
unabhängig voneinander jeweils für einen einwertigen Kohlenwasserstoffrest mit 1 bis 12 C-Atomen stehen, oder zusammen für einen zweiwertigen Kohlenwasserstoffrest mit 4 bis 12 C-Atomen, der Teil eines, gegebenenfalls substituierten, carbocyclischen Rings mit 5 bis 8, bevorzugt 6, C-Atomen ist, stehen,
oder für einen Rest Z² steht,
wobei Z² entweder für einen substituierten oder unsubstituierten Aryl- oder Heteroaryl-Rest, welcher eine Ringgrösse von 5 bis 8, bevorzugt 6, Atomen aufweist, steht,
oder für 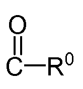 steht, wobei R⁰ für ein Wasserstoffatom oder für einen Alkoxyrest oder für einen substituierten oder unsubstituierten Alkenyl- oder Arylalkenylrest mit mindestens 6 C-Atomen steht.

4. Härtbare Zusammensetzung gemäss Anspruch 3, **dadurch gekennzeichnet, dass** das Aldimin **BA2** der Formel (I) einen Rest Z¹ der Formel (III a) oder (III b) oder (III c) oder (III d) aufweist 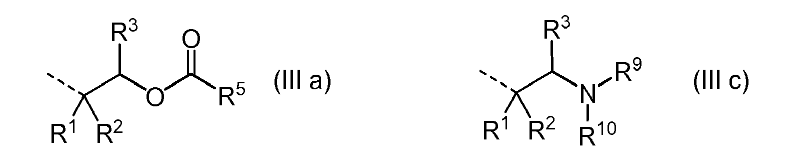 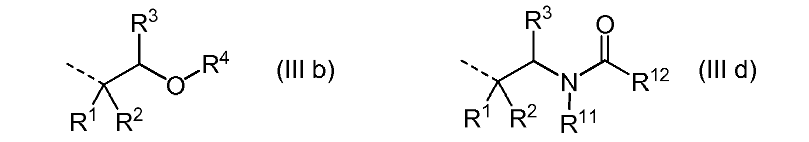 wobei
R³ für ein Wasserstoffatom oder für eine Alkylgruppe oder für eine Cycloalkylgruppe oder für eine Arylalkylgruppe mit 1 bis 12 C-Atomen steht;
R⁴ für einen Kohlenwasserstoffrest mit 1 bis 30 C-Atomen, welcher gegebenenfalls Ether-Sauerstoff enthält, steht;
R⁵ für ein Wasserstoffatom steht,
oder für einen linearen oder verzweigten Alkylrest mit 1 bis 30 C-Atomen, gegebenenfalls mit cyclischen Anteilen und gegebenenfalls mit mindestens einem Heteroatom, insbesondere Sauerstoff in der Form von Ether-, Carbonyl- oder Ester-Gruppen, steht,
oder für einen einfach oder mehrfach ungesättigten, linearen oder verzweigten Kohlenwasserstoffrest mit 5 bis 30 C-Atomen steht, oder für einen, gegebenenfalls substituierten, aromatischen oder heteroaromatischen 5- oder 6-gliedrigen Ring steht;
R⁹ und R¹⁰ entweder
unabhängig voneinander jeweils für einen einwertigen aliphatischen, cycloaliphatischen oder arylaliphatischen Rest mit 1 bis 20 C- Atomen, welcher gegebenenfalls Heteroatome in der Form von Ether-Sauerstoff oder tertiärem Amin-Stickstoff enthält, stehen, oder zusammen für einen zweiwertigen aliphatischen Rest mit 3 bis 20 C-Atomen, der Teil eines, gegebenenfalls substituierten, hetero- cyclischen Rings mit 5 bis 8, bevorzugt 6, Ringatomen ist und neben dem Stickstoffatom gegebenenfalls weitere Heteroatome in der Form von Ether-Sauerstoff oder tertiärem Amin-Stickstoff enthält, stehen; und
R¹¹ und R¹² entweder
zusammen für einen, gegebenenfalls Sauerstoff- oder Schwefel- atome aufweisenden, zweiwertigen Rest mit 2 bis 10 C-Atomen, der Teil eines, gegebenenfalls substituierten, 5- oder 6- oder 7- gliedrigen Rings ist, stehen,
oder
R¹¹ für einen Alkyl-, Cycloalkyl-, Arylalkyl- oder Acylrest mit 1 bis 10 C-Atomen steht, und
R¹² für ein Wasserstoffatom oder für einen einwertigen Rest mit 1 bis 20 C-Atomen ausgewählt aus der Gruppe bestehend aus Alkyl-, Cycloalkyl-, Arylalkyl-, Arylrest, -OR^{12'}, -SR^{12'} und -NR^{12'}R^{12"} steht,
wobei R^{12'} und R^{12"} entweder jeweils für einen Kohlenwasserstoffrest oder zusammen für einen Alkylenrest, der Teil eines 5-, 6- oder 7-gliedrigen Rings ist, stehen.

5. Härtbare Zusammensetzung gemäss Anspruch 4, **dadurch gekennzeichnet, dass** R⁴ für einen Kohlenwasserstoffrest mit 6 bis 30, insbesondere mit 11 bis 30, C-Atomen, welcher gegebenenfalls Ether-Sauerstoff enthält, steht.

6. Härtbare Zusammensetzung gemäss Anspruch 4, **dadurch gekennzeichnet, dass** R⁵ für einen linearen oder verzweigten Alkylrest mit 6 bis 30, insbesondere mit 11 bis 30, C-Atomen, gegebenenfalls mit cyclischen Anteilen und gegebenenfalls mit mindestens einem Heteroatom, oder für einen einfach oder mehrfach ungesättigten, linearen oder verzweigten Kohlenwasserstoffrest mit 6 bis 30, insbesondere mit 11 bis 30, C-Atomen steht.

7. Härtbare Zusammensetzung gemäss einem der Ansprüche 3 bis 6, **dadurch gekennzeichnet, dass** m für 0 steht.

8. Härtbare Zusammensetzung gemäss einem der vorhergehenden Ansprüche, **dadurch gekennzeichnet, dass** das blockierte Amin **BA** in der härtbaren Zusammensetzung in einer derartigen Menge vorhanden ist, dass das Verhältnis der Anzahl der blockierten Aminogruppen und gegebenenfalls vorhandenen Hydroxyl-, Mercapto- und sekundären und primären Aminogruppen zur Anzahl der Isocyanatgruppen 0.6 bis 1.1, bevorzugt 0.7 bis 1.0, insbesondere 0.8 bis 1.0, beträgt, mit der Massgabe, dass falls blockierte Aminogruppen in Form von Oxazolidinogruppen vorhanden sind, diese doppelt gezählt werden, da diese nach erfolgter Hydrolyse gegenüber Isocyanatgruppen formal difunktionell sind.

9. Härtbare Zusammensetzung gemäss einem der vorhergehenden Ansprüche, **dadurch gekennzeichnet, dass** die Substanz **W** einen mittleren Teilchendurchmesser von 0.01 bis 100 µm, bevorzugt 0.1 bis 50 µm, besonders bevorzugt 0.3 bis 30 µm, aufweist.

10. Härtbare Zusammensetzung gemäss einem der vorhergehenden Ansprüche, **dadurch gekennzeichnet, dass** die Substanz **W** in der härtbaren Zusammensetzung in einer derartigen Menge vorhanden ist, dass das Verhältnis der Anzahl blockierte Aminogruppen des blockierten Amins **BA** zur Anzahl Wassermoleküle, welche bis zu einer maximalen Temperatur von 160 °C, bevorzugt 140 °C, besonders bevorzugt 130 °C, aus der Substanz **W** insgesamt gebildet werden können, 0.5 bis 2.0, bevorzugt 0.75 bis 1.5, insbesondere 0.8 bis 1.2, beträgt.

11. Härtbare Zusammensetzung gemäss einem der vorhergehenden Ansprüche, **dadurch gekennzeichnet, dass** die Substanz **W** Borsäure (B(OH)₃) ist.

12. Härtbare Zusammensetzung gemäss einem der vorhergehenden Ansprüche, **dadurch gekennzeichnet, dass** die Zusammensetzung eine einkomponentige Zusammensetzung **EZ** ist.

13. Härtbare Zusammensetzung gemäss einem der Ansprüche 1 bis 11, **dadurch gekennzeichnet, dass** die Zusammensetzung eine zweikomponentige Zusammensetzung **ZZ** ist, bestehend aus einer ersten Komponente **K1** und einer zweiten Komponente **K2,** wobei die erste Komponente **K1** mindestens das Isocyanatgruppen aufweisende Polymer **P** und die zweite Komponente **K2** mindestens die Wasser erzeugende Substanz **W** enthält.

14. Verfahren zum Verkleben von einem Substrat **S1** mit einem Substrat **S2,** welches die Schritte umfasst:
i) Applikation der Zusammensetzung gemäss einem der Ansprüche 1 bis 13 auf ein Substrat **S1;**
ii) Kontaktieren der applizierten Zusammensetzung mit einem
Substrat **S2** innerhalb der Offenzeit der Zusammensetzung;
oder
i') Applikation der Zusammensetzung gemäss einem der Ansprüche 1 bis 13 auf ein Substrat **S1** und auf ein Substrat **S2;**
ii') Kontaktieren der applizierten Zusammensetzung miteinander
innerhalb der Offenzeit der Zusammensetzung;
und die Zusammensetzung gegebenenfalls anschliessend in einem Schritt iii) mit einer geeigneten Methode auf eine Mindesttemperatur im Bereich von 50 °C bis 100 °C, vorteilhaft zwischen 60 °C und 160 °C, bevorzugt zwischen 80 °C und 140 °C, besonders bevorzugt zwischen 90 °C und 130 °C, aufgewärmt wird;
wobei das Substrat **S2** aus dem gleichen oder einem unterschiedlichen Material wie das Substrat **S1** besteht.

15. Verwendung einer härtbaren Zusammensetzung gemäss einem der Ansprüche 1 bis 13 als Klebstoff, Dichtstoff oder Beschichtung, insbesondere als Klebstoff für Industrieanwendungen.
